# EUROPEAN PATENT APPLICATION

(11) **EP 4 770 183 A1**
(43) Date of publication of application: **01.07.2026**
(21) Application number: 24857937.7
(22) Date of filing: 11.06.2024
(51) Int. Cl.: H04W 24/10

(54) **PERFORMANCE MONITORING METHOD AND COMMUNICATION DEVICE**

(30) Priority: 25.08.2023 CN 202311079134
(71) Applicant: Datang Mobile Communications Equipment Co., Ltd., Beijing 100085 (CN)
(72) Inventor: ZUO, Jun, Beijing 100085 (CN); GAO, Qiubin, Beijing 100085 (CN); ZHU, Min, Beijing 100085 (CN)
(74) Representative: Studio Torta S.p.A.
(86) International application number: PCT/CN2024/098313
(87) International publication number: WO 2025/044392

(57) **Abstract**

The present disclosure provides a performance monitoring method and a communication device. The performance monitoring method includes: determining, by UE, whether a reporting condition of monitoring-related information of a first model is satisfied; reporting, by the UE, the monitoring-related information of the first model, to the network device, when the reporting condition is satisfied.

## Description

The present application is filed based on and claims the priority of Chinese Application No. 202311079134.2 filed on August 25, 2023, entitled "model monitoring method and communication device", the disclosure of which are incorporated in their entireties by reference herein.

### TECHNICAL FIELD

The present disclosure relates to the field of communication technology, and in particular to a performance monitoring method and communication device.

### BACKGROUND

In order to reduce measurement overhead of the communication system, a solution of using artificial intelligence (AI) or machine learning (ML) is proposed, that is, using an AI/ML model to perform relevant predictions based on a small number of measurement results or historical measurement results. In order to ensure the performance of the AI/ML applied to the communication system, it is necessary to perform model monitoring on the AI/ML model. During the model monitoring process, a terminal is required to report a measurement result and/or prediction result to a network device. At present, there is no clear solution on how to report related information of the model monitoring during the model monitoring process.

### SUMMARY

Embodiments of the present disclosure provide a performance monitoring method and communication device, which can solve the problem of how to report performance monitoring-related information during the performance monitoring process.

One embodiment of the present disclosure provides a performance monitoring method, including:
determining, by a user equipment (UE), whether a reporting condition of monitoring-related information of a first model is satisfied;
reporting, by the UE, the monitoring-related information of the first model, to the network device, when the reporting condition is satisfied.

In some embodiments, the method further includes:
determining, by the UE, according to first information transmitted by the network device, the reporting condition of the monitoring-related information of the first model; wherein the first information is used to indicate at least one of the following:
a monitoring-reporting period of the first model;
a monitoring start time of the first model;
a first preset condition that a prediction result of the first model needs to satisfy.

In some embodiments, the method further includes:
determining, by the UE, the reporting condition of the monitoring-related information of the first model according to a predefined performance monitoring-related parameter; wherein the performance monitoring-related parameter includes at least one of the following:
a monitoring-reporting period of the first model;
a monitoring start time of the first model;
a first preset condition that a prediction result of the first model needs to satisfy.

In some embodiments, the reporting condition includes at least one of the following:
a reporting moment of the monitoring reporting period of the first model arrives;
the UE receiving reporting trigger information from the network device, wherein the reporting trigger information is used to indicate reporting of the monitoring-related information of the first model;
the UE detecting that a prediction result of the first model satisfies the first preset condition.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

In some embodiments, the monitoring-related information reported by the UE includes at least one of the following:
measurement results of N measurements performed by the UE on the reference signal, where N is an integer greater than 1;
prediction results of N predictions of the first model; where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

In some embodiments, the N measurements are all measurements of the UE; or, the N measurements are selected by the UE from all measurements; or, the N measurements are corresponding to N predictions selected by the UE from all predictions of the first model.

In some embodiments, the UE uses a bit map to indicate measurement orders of the N measurements in all measurements through, or indicate measurement identifier information of the N measurements.

In some embodiments, the N measurements selected by the UE from all measurements include at least one of the following:
a first measurement within the monitoring reporting period of the first model;
a first measurement starting from the monitoring start time of the first model;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

In some embodiments, the N predictions selected by the UE from all predictions of the first model include at least one of the following:
a first prediction within the monitoring and reporting period;
a first prediction starting from the monitoring start time;
a prediction whose prediction result differs from that of a previous prediction;
a prediction where a difference between its prediction result maximum value and a prediction result maximum value of a previous prediction is greater than a ninth threshold;
a prediction where a difference between its prediction result minimum value and a prediction result minimum value of a previous prediction is greater than a tenth threshold;
a prediction where a difference between its prediction result average value and a prediction result average value of a previous prediction is greater than an eleventh threshold;
a prediction where a difference between its prediction result standard deviation and a prediction result standard deviation of a previous prediction is greater than a twelfth threshold;
a prediction where a difference between its prediction result variance and a prediction result variance of a previous prediction is greater than a thirteenth threshold.

In some embodiments, the reporting, by the UE, the monitoring-related information of the first model, to the network device, includes:
reporting, by the UE, the monitoring-related information of the first model to the network device on a first resource;
wherein the first resource includes any of the following:
   a resource configured by the network device for reporting the monitoring-related information of the first model;
   PUSCH resources already available to the UE;
   PUSCH resources requested by the UE through a Scheduling Request (SR).

In some embodiments, the method further includes:
when storing a measurement result of an L-th measurement, if a required storage space exceeds a remaining storage space of the UE, discarding, by the UE, a stored earliest measurement result and storing the measurement result of the L-th measurement.

One embodiment of the present disclosure provides a performance monitoring method, including:
receiving, by a network device, monitoring-related information of a first model reported by a user equipment (UE);
performing, by the network device, performance monitoring of the first model based on the monitoring-related information.

In some embodiments, the method further includes:
transmitting, by the network device, first information to the UE, wherein the first information is used to indicate at least one of the following:
a monitoring-reporting period of the first model;
a monitoring start time of the first model;
a first preset condition that a prediction result of the first model needs to satisfy.

In some embodiments, the method further includes:
transmitting, by the network device, reporting trigger information to the UE, wherein the reporting trigger information is used to instruct reporting of the monitoring-related information of the first model.

In some embodiments, the transmitting, by the network device, reporting trigger information to the UE, includes:
when the network device monitors that a system performance indicator meets a second preset condition, transmitting the reporting trigger information to the UE.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

In some embodiments, the performing, by the network device, performance monitoring of the first model based on the monitoring-related information, includes:
calculating, by the network device, a monitoring indicator of the first model based on the monitoring-related information.

In some embodiments, when the first model is deployed on the network device, the monitoring-related information includes measurement results of N measurements performed by the UE on the reference signal, wherein N is an integer greater than 1;
the calculating, by the network device, a monitoring indicator of the first model based on the monitoring-related information, includes:
selecting, by the network device, N predictions corresponding to the N measurements from all predictions of the first model;
calculating, by the network device, the monitoring indicator of the first model according to prediction results of the N predictions and the measurement results of the N measurements;
   or,
the calculating, by the network device, a monitoring indicator of the first model based on the monitoring-related information, includes:
   selecting, by the network device, M measurements from the N measurements, where M is an integer greater than 1;
   selecting, by the network device, M predictions corresponding to the M measurements from all predictions of the first model;
   calculating, by the network device, the monitoring indicator of the first model according to the prediction results of the M predictions and the measurement results of the M measurements.

In some embodiments, the M measurements selected by the network device from the N measurements include at least one of the following:
a first measurement within the monitoring reporting period;
a first measurement starting from the monitoring start time;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

In some embodiments, when the first model is deployed on the UE, the monitoring-related information includes at least one of the following:
measurement results of N measurements performed by the UE on a reference signal, where N is an integer greater than 1;
prediction results of N predictions of the first model, where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

In some embodiments, the receiving, by a network device, monitoring-related information of a first model reported by a user equipment (UE), includes:
receiving, by a network device, on a first resource, the monitoring-related information of the first model reported by the UE;
wherein the first resource includes any of the following:
   a resource configured by the network device for reporting the monitoring-related information of the first model;
   PUSCH resources already available to the UE;
   PUSCH resources requested by the UE through a Scheduling Request (SR).

In some embodiments, the method further includes:
performing, by the network device, a first process according to a monitoring indicator of the first model, wherein the first process includes any one of the following:
activating the first model;
deactivating the first model.

One embodiment of the present disclosure provides a user equipment (UE), inclduing: a memory, a transceiver and a processor;
wherein the memory is used to store a computer program; the transceiver is used to send and receive data under the control of the processor; the processor is used to read the computer program in the memory and perform the following operations:
determining whether a reporting condition of monitoring-related information of a first model is satisfied;
reporting the monitoring-related information of the first model, to the network device, when the reporting condition is satisfied.

In some embodiments, the processor is used to read the computer program in the memory and perform the following operations:
determining, according to first information transmitted by the network device, the reporting condition of the monitoring-related information of the first model; wherein the first information is used to indicate at least one of the following:
a monitoring-reporting period of the first model;
a monitoring start time of the first model;
a first preset condition that a prediction result of the first model needs to satisfy.

In some embodiments, the processor is used to read the computer program in the memory and perform the following operations:
determining the reporting condition of the monitoring-related information of the first model according to a predefined performance monitoring-related parameter; wherein the performance monitoring-related parameter includes at least one of the following:
a monitoring-reporting period of the first model;
a monitoring start time of the first model;
a first preset condition that a prediction result of the first model needs to satisfy.

In some embodiments, the reporting condition includes at least one of the following:
a reporting moment of the monitoring reporting period of the first model arrives;
the UE receiving reporting trigger information from the network device, wherein the reporting trigger information is used to indicate reporting of the monitoring-related information of the first model;
the UE detecting that a prediction result of the first model satisfies the first preset condition.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

In some embodiments, the monitoring-related information reported by the UE includes at least one of the following:
measurement results of N measurements performed by the UE on the reference signal, where N is an integer greater than 1;
prediction results of N predictions of the first model; where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

In some embodiments, the N measurements are all measurements of the UE; or, the N measurements are selected by the UE from all measurements; or, the N measurements are corresponding to N predictions selected by the UE from all predictions of the first model.

In some embodiments, the processor is used to read the computer program in the memory and perform the following operations:
using a bit map to indicate measurement orders of the N measurements in all measurements through, or indicate measurement identifier information of the N measurements.

In some embodiments, the N measurements selected by the UE from all measurements include at least one of the following:
a first measurement within the monitoring reporting period of the first model;
a first measurement starting from the monitoring start time of the first model;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

In some embodiments, the N predictions selected by the UE from all predictions of the first model include at least one of the following:
a first prediction within the monitoring and reporting period;
a first prediction starting from the monitoring start time;
a prediction whose prediction result differs from that of a previous prediction;
a prediction where a difference between its prediction result maximum value and a prediction result maximum value of a previous prediction is greater than a ninth threshold;
a prediction where a difference between its prediction result minimum value and a prediction result minimum value of a previous prediction is greater than a tenth threshold;
a prediction where a difference between its prediction result average value and a prediction result average value of a previous prediction is greater than an eleventh threshold;
a prediction where a difference between its prediction result standard deviation and a prediction result standard deviation of a previous prediction is greater than a twelfth threshold;
a prediction where a difference between its prediction result variance and a prediction result variance of a previous prediction is greater than a thirteenth threshold.

In some embodiments, the processor is used to read the computer program in the memory and perform the following operations:
reporting the monitoring-related information of the first model to the network device on a first resource;
wherein the first resource includes any of the following:
   a resource configured by the network device for reporting the monitoring-related information of the first model;
   PUSCH resources already available to the UE;
   PUSCH resources requested by the UE through a Scheduling Request (SR).

In some embodiments, the processor is used to read the computer program in the memory and perform the following operations:
when storing a measurement result of an L-th measurement, if a required storage space exceeds a remaining storage space of the UE, discarding a stored earliest measurement result and storing the measurement result of the L-th measurement.

One embodiment of the present disclosure provides a network device, including: a memory, a transceiver and a processor;
wherein the memory is used to store a computer program; the transceiver is used to send and receive data under the control of the processor; the processor is used to read the computer program in the memory and perform the following operations:
receiving monitoring-related information of a first model reported by a user equipment (UE);
performing performance monitoring of the first model based on the monitoring-related information.

In some embodiments, the processor is used to read the computer program in the memory and perform the following operations:
transmitting first information to the UE, wherein the first information is used to indicate at least one of the following:
a monitoring-reporting period of the first model;
a monitoring start time of the first model;
a first preset condition that a prediction result of the first model needs to satisfy.

In some embodiments, the processor is used to read the computer program in the memory and perform the following operations:
transmitting reporting trigger information to the UE, wherein the reporting trigger information is used to instruct reporting of the monitoring-related information of the first model.

In some embodiments, the processor is used to read the computer program in the memory and perform the following operations:
when the network device monitors that a system performance indicator meets a second preset condition, transmitting the reporting trigger information to the UE.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

In some embodiments, the processor is used to read the computer program in the memory and perform the following operations:
calculating a monitoring indicator of the first model based on the monitoring-related information.

In some embodiments, when the first model is deployed on the network device, the monitoring-related information includes measurement results of N measurements performed by the UE on the reference signal, wherein N is an integer greater than 1;
wherein the processor is used to read the computer program in the memory and perform the following operations:
selecting, by the network device, N predictions corresponding to the N measurements from all predictions of the first model;
calculating, by the network device, the monitoring indicator of the first model according to prediction results of the N predictions and the measurement results of the N measurements;
   or,
selecting, by the network device, M measurements from the N measurements, where M is an integer greater than 1;
selecting, by the network device, M predictions corresponding to the M measurements from all predictions of the first model;
calculating, by the network device, the monitoring indicator of the first model according to the prediction results of the M predictions and the measurement results of the M measurements.

In some embodiments, the M measurements selected by the network device from the N measurements include at least one of the following:
a first measurement within the monitoring reporting period;
a first measurement starting from the monitoring start time;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

In some embodiments, when the first model is deployed on the UE, the monitoring-related information includes at least one of the following:
measurement results of N measurements performed by the UE on a reference signal, where N is an integer greater than 1;
prediction results of N predictions of the first model, where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

In some embodiments, the processor is used to read the computer program in the memory and perform the following operations:
receiving, on a first resource, the monitoring-related information of the first model reported by the UE;
wherein the first resource includes any of the following:
   a resource configured by the network device for reporting the monitoring-related information of the first model;
   PUSCH resources already available to the UE;
   PUSCH resources requested by the UE through a Scheduling Request (SR).

In some embodiments, the processor is used to read the computer program in the memory and perform the following operations:
performing a first process according to a monitoring indicator of the first model, wherein the first process includes any one of the following:
activating the first model;
deactivating the first model.

One embodiment of the present disclosure provides a user equipment (UE), including:
a first determination module used to determine whether a reporting condition of monitoring-related information of a first model is satisfied;
a reporting module used to report the monitoring-related information of the first model, to the network device, when the reporting condition is satisfied.

In some embodiments, the UE further includes:
a second determining module used to determine, according to first information transmitted by the network device, the reporting condition of the monitoring-related information of the first model; wherein the first information is used to indicate at least one of the following:
a monitoring-reporting period of the first model;
a monitoring start time of the first model;
a first preset condition that a prediction result of the first model needs to satisfy.

In some embodiments, the UE further includes:
a third determination module used to determine the reporting condition of the monitoring-related information of the first model according to a predefined performance monitoring-related parameter; wherein the performance monitoring-related parameter includes at least one of the following:
a monitoring-reporting period of the first model;
a monitoring start time of the first model;
a first preset condition that a prediction result of the first model needs to satisfy.

In some embodiments, the reporting condition includes at least one of the following:
a reporting moment of the monitoring reporting period of the first model arrives;
the UE receiving reporting trigger information from the network device, wherein the reporting trigger information is used to indicate reporting of the monitoring-related information of the first model;
the UE detecting that a prediction result of the first model satisfies the first preset condition.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

In some embodiments, the monitoring-related information reported by the UE includes at least one of the following:
measurement results of N measurements performed by the UE on the reference signal, where N is an integer greater than 1;
prediction results of N predictions of the first model; where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

In some embodiments, the N measurements are all measurements of the UE; or, the N measurements are selected by the UE from all measurements; or, the N measurements are corresponding to N predictions selected by the UE from all predictions of the first model.

In some embodiments, the UE uses a bit map to indicate measurement orders of the N measurements in all measurements through, or indicate measurement identifier information of the N measurements.

In some embodiments, the N measurements selected by the UE from all measurements include at least one of the following:
a first measurement within the monitoring reporting period of the first model;
a first measurement starting from the monitoring start time of the first model;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

In some embodiments, the N predictions selected by the UE from all predictions of the first model include at least one of the following:
a first prediction within the monitoring and reporting period;
a first prediction starting from the monitoring start time;
a prediction whose prediction result differs from that of a previous prediction;
a prediction where a difference between its prediction result maximum value and a prediction result maximum value of a previous prediction is greater than a ninth threshold;
a prediction where a difference between its prediction result minimum value and a prediction result minimum value of a previous prediction is greater than a tenth threshold;
a prediction where a difference between its prediction result average value and a prediction result average value of a previous prediction is greater than an eleventh threshold;
a prediction where a difference between its prediction result standard deviation and a prediction result standard deviation of a previous prediction is greater than a twelfth threshold;
a prediction where a difference between its prediction result variance and a prediction result variance of a previous prediction is greater than a thirteenth threshold.

In some embodiments, the reporting module is specifically used to:
report the monitoring-related information of the first model to the network device on a first resource;
wherein the first resource includes any of the following:
   a resource configured by the network device for reporting the monitoring-related information of the first model;
   PUSCH resources already available to the UE;
   PUSCH resources requested by the UE through a Scheduling Request (SR).

In some embodiments, the UE further includes:
a processing module used to, when storing a measurement result of an L-th measurement, if a required storage space exceeds a remaining storage space of the UE, discard a stored earliest measurement result and store the measurement result of the L-th measurement.

One embodiment of the present disclosure provides a network device, including:
a receiving module used to receive monitoring-related information of a first model reported by a user equipment (UE);
a monitoring module used to perform performance monitoring of the first model based on the monitoring-related information.

In some embodiments, the network device further includes:
a first transmission module used to transmit first information to the UE, wherein the first information is used to indicate at least one of the following:
a monitoring-reporting period of the first model;
a monitoring start time of the first model;
a first preset condition that a prediction result of the first model needs to satisfy.

In some embodiments, the network device further includes:
a second transmission module used to transmit reporting trigger information to the UE, wherein the reporting trigger information is used to instruct reporting of the monitoring-related information of the first model.

In some embodiments, the network device further includes:
a third transmission module used to, when the network device monitors that a system performance indicator meets a second preset condition, transmit the reporting trigger information to the UE.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

In some embodiments, the monitoring module includes:
a calculation unit used to calculate a monitoring indicator of the first model based on the monitoring-related information.

In some embodiments, when the first model is deployed on the network device, the monitoring-related information includes measurement results of N measurements performed by the UE on the reference signal, wherein N is an integer greater than 1;
wherein the calculation unit includes:
a first filtering subunit used to select N predictions corresponding to the N measurements from all predictions of the first model;
a first calculation subunit used to calculate the monitoring indicator of the first model according to prediction results of the N predictions and the measurement results of the N measurements;
   or,
wherein the calculation unit includes:
   a second filtering subunit used to select M measurements from the N measurements, where M is an integer greater than 1;
   a third screening subunit used to select M predictions corresponding to the M measurements from all predictions of the first model;
   a second calculation subunit used to calculate the monitoring indicator of the first model according to the prediction results of the M predictions and the measurement results of the M measurements.

In some embodiments, the M measurements selected by the network device from the N measurements include at least one of the following:
a first measurement within the monitoring reporting period;
a first measurement starting from the monitoring start time;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

In some embodiments, when the first model is deployed on the UE, the monitoring-related information includes at least one of the following:
measurement results of N measurements performed by the UE on a reference signal, where N is an integer greater than 1;
prediction results of N predictions of the first model, where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

In some embodiments, the receiving module is specifically used to:
receive, on a first resource, the monitoring-related information of the first model reported by the UE;
wherein the first resource includes any of the following:
   a resource configured by the network device for reporting the monitoring-related information of the first model;
   PUSCH resources already available to the UE;
   PUSCH resources requested by the UE through a Scheduling Request (SR).

In some embodiments, the network device further includes:
a processing module used to perform a first process according to a monitoring indicator of the first model, wherein the first process includes any one of the following:
activating the first model;
deactivating the first model.

One embodiment of the present disclosure provides a processor-readable storage medium, including: a computer program stored thereon; wherein the computer program is used to cause a processor to execute any performance monitoring method on the UE side provided in the embodiments of the present disclosure; or, the computer program is used to cause the processor to execute any performance monitoring method on the network device side provided in the embodiments of the present disclosure.

In the embodiment of the present disclosure, the UE determines whether the reporting condition of the monitoring-related information of the first model is satisfied; if the reporting condition is satisfied, the UE reports the monitoring-related information of the first model to the network device. Through the above process, if the reporting condition of the monitoring-related information of the first model is satisfied, the UE reports the performance monitoring-related information to the network device, so that the UE can report related information of multiple performance monitoring to the network device together, which can reduce the reporting overhead of the UE during the performance monitoring process.

### BRIEF DESCRIPTION OF THE DRAWINGS

FIG. 1 is a structural diagram of a network system applicable to embodiments of the present disclosure;
FIG. 2 is a flow chart of performance monitoring corresponding to models deployed on a base station side;
FIG. 3 is a flow chart of performance monitoring corresponding to models deployed on a user equipment (UE) side;
FIG. 4 is a flow chart of a performance monitoring method according to an embodiment of the present disclosure;
FIG. 5 is a schematic diagram of a base station transmitting a reference signal and a UE reporting a measurement value during a performance monitoring process according to an embodiment of the present disclosure;
FIG. 6 is a flow chart of another performance monitoring method according to an embodiment of the present disclosure;
FIG. 7 is a structural diagram of a UE according to an embodiment of the present disclosure;
FIG. 8 is a structural diagram of a network device according to an embodiment of the present disclosure;
FIG. 9 is a structural diagram of another UE according to an embodiment of the present disclosure; and
FIG. 10 is a structural diagram of another network device according to an embodiment of the present disclosure.

### DETAILED DESCRIPTION

In order to make technical problems to be solved, technical solutions and advantages of the present disclosure clearer, the following will be described in detail in conjunction with the accompanying drawings and specific embodiment

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in embodiments of the present application are described clearly and completely in conjunction with drawings in the embodiments of the present application. Apparently, the described embodiments are merely a part of rather than all the embodiments of the present application. All other embodiments obtained by a person ordinary skilled in the art based on the embodiments of the present application without any creative efforts fall within the protection scope of the present application.

The embodiments of the present disclosure provide a performance monitoring method, a user equipment, a network device and a storage medium, which can solve the problem of how to report performance monitoring-related information during the performance monitoring process.

The method and the device are based on the same application concept. Since the principles of solving problems in the method and the device are similar, reference may be made to each other for implementations of the device and the method, the repetition of which is not further provided herein.

The technical solution of the embodiment of the present disclosure may be applied to various systems, especially a 5G system and a 6G system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD), LTE time division duplex (TDD) system, long term evolution advanced (LTE-A) system, universal mobile telecommunication system (UMTS), worldwide interoperability for microwave access (WiMAX) system, 5th-Generation (5G) New Radio (NR) system, or 6G system. Each of these systems includes a terminal device and a network device. Each system further includes a core network part, e.g., an evolved packet system (EPS) or 5G system (5GS/5GC).

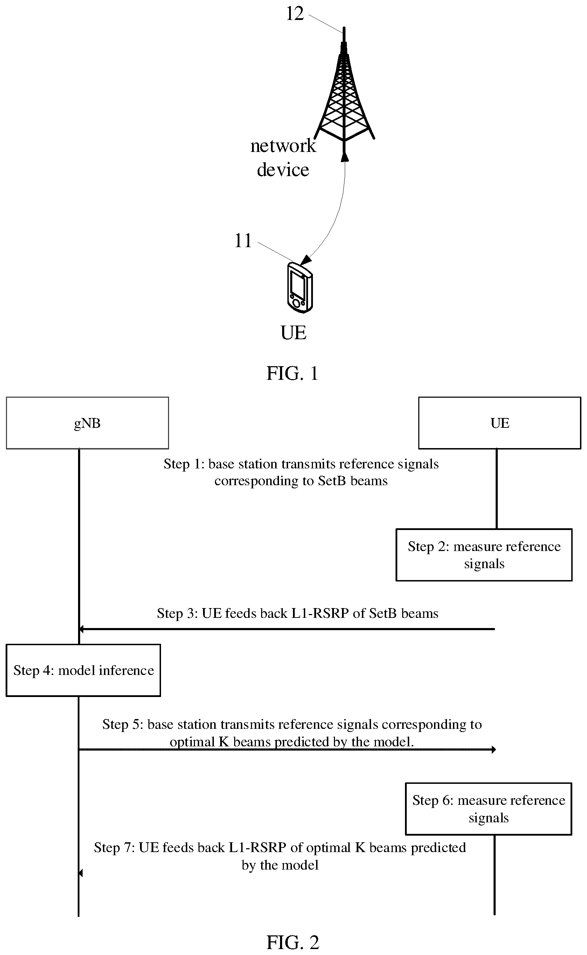

Referring to FIG. **1,** FIG. 1 shows a schematic diagram of an applicable network architecture according to an embodiment of the present disclosure. As shown in FIG. 1, a terminal device 11 and a network device 12 are included.

The terminal device 11 involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, a Personal Digital Assistant (PDA), or Reduced Capability (Redcap). The wireless terminal device may also be called as system, subscriber unit, subscriber station, mobile station, mobile, remote station, access point, remote terminal, access terminal, user terminal, user agent or user device, which will not be particularly defined herein.

The network device 12 involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a base station in 6G, a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

In embodiments of the present disclosure, multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

The following first introduces the contents involved in the solution provided by the embodiment of the present disclosure.

In the NR system, in order to combat the path loss in high-frequency scenarios, a transmitter and a receiver obtain matching beam pairs through beam management (BM) to improve beamforming gain. In the downlink beam management process of the related art, based on beam measurement information reported by the UE, a base station selects an appropriate transmitting beam (Tx beam) for subsequent communication, and indicates information of the selected beam to the UE. The main drawback of the related art lies in that in order to obtain the optimal beam pair, the base station needs to transmits a channel state information reference signal (CSI-RS)/synchronization signal block (SSB) on all Tx beams, which consumes significant reference signal resources. Meanwhile, the UE needs to use all receiving beams (Rx beams) to measure the CSI-RS/SSB transmitted on each Tx beam separately, which incurs significant measurement overhead. In order to solve these problems, it is proposed to use AI/ML technology to predict an optimal beam (pair) based on measurement of some beams (pairs) or measurement results of historical beams (pairs), thereby saving reference signal resource overhead and UE measurement overhead, and reducing UE measurement delay.

For example, the 3rd Generation Partnership Project (3GPP) Release 18 (Rel-18) air interface (AI) topic identifies the following two sub-use cases as sub-use cases for AI beam management:
BM-case1: spatial beam prediction, that is, predicting the top K (also called Top-K) beams (pairs) in a set A (SetA) based on a set B (SetB) measured at a certain moment;
BM-case2: time domain beam prediction, that is, predicting the Top-K beams (pairs) of a SetA at the next N' moments based on SetB measured at the historical N moments;
where SetA can be understood as a full set of beams, which may include 32 transmitting beams; SetB can be understood as a beam subset, i.e., a subset of Set A, which may include 8 transmitting beams.

An output of the AI/ML model can be IDs of predicted Top-K beams (pairs) in SetA, or predicted Reference Signal Received Power (RSRP) of beams (pairs) of SetA. The latter can be used to select Top-K beam pairs based on sizes of the predicted RSRP.

As data-driven algorithms, AI/ML algorithms have generalization problems and lack theoretical guarantees for their performance. In order to ensure the performance of AI/ML applied to communication systems, it is necessary to monitor the AI/ML models.

Different AI/ML models can use different indicators for model monitoring. The model monitoring indicators currently supported by 3GPP include a beam prediction indicator, or indicators such as a difference between a measured RSRP and a predicted RSRP. The beam prediction indicator is applicable to models whose output is RSRP of Top-K beam (pair) id or SetA; the difference between the measured RSRP and the predicted RSRP is applicable to models whose output is the RSRP of SetA.

The beam prediction indicator may include the best K/best (can be called Top-K/1) beam prediction accuracy, the Top-1/K beam prediction accuracy, and the best beam prediction accuracy within the X dB range, which are defined as follows:
Top-K/1 beam prediction accuracy is a probability that the predicted Top-K beams include an actual optimal (can be called Top-1) beam;
Top-1/K beam prediction accuracy is a probability that the predicted Top-1 beam belongs to an actual Top-K beam;
the accuracy of optimal beam prediction within X dB range is a probability that a difference between a predicted Layer 1 RSRP (L1-RSRP) measurement value of the Top-1 beam and an actual L1-RSRP measurement value of the Top-1 beam is within the X dB range.

The above "actual Top-1/Top-K beam" is obtained by the UE's measurement of a certain reference signal set. For example, the UE measures the SetA reference signal set and obtains a beam corresponding to the Top-1 or Top-K L1-RSRP.

The difference between the measured RSRP and the predicted RSRP refers to a difference between a measured RSRP and a predicted RSRP of the beam subset (such as SetB beam or Top-K beams predicted by the model). The advantage of using this indicator is that only the beam subset needs to be sent and measured, and all beams of SetA do not need to be sent and measured, thereby saving reference signal resource overhead and UE measurement overhead.

The AI model can be deployed on the base station side or on the UE side. If the model is deployed on the base station side, model monitoring is typically performed by the base station, that is, the base station compares the model prediction result (also referred to as an inference result) with a standard result to determine whether the current model is applicable. If the model is deployed on the UE side, the UE can report a model inference result and a measurement result to the base station, and the base station compares the model inference result with the benchmark results; or, the UE can directly report the model monitoring results to the base station, and the base station determines whether the current model is applicable.

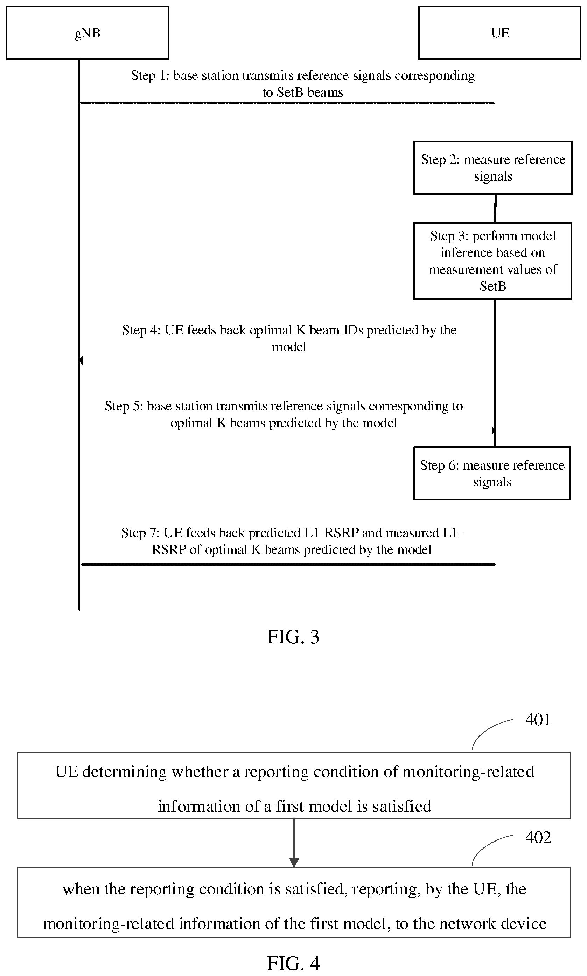

By taking the deployment of the AI/ML model on the base station side as an example, if the output of the AI/ML model is the predicted L1-RSRP of the SetA beam, a difference between a L1-RSRP measurement value and s L1-RSRP predicted value of the predicted Top-K beam is used as s model monitoring indicator, and the model monitoring process is shown in FIG. 2. If the AI/ML model is deployed on the UE side, the above model monitoring process is shown in FIG. 3.

It can be seen that no matter whether the AI/ML model is deployed on the base station side or on the UE side, when the model is monitored by the base station side, the UE needs to report the measurement results and/or inference results to the base station. For example, steps six and seven in FIG. 2 and FIG. 3 both involve that the UE measures Top-K beams predicted by the model and feeds back the relevant result to the base station. In the reporting of layer 1 beam quality (such as L1-RSRP, L1-SINR) in the related art, the base station configures or indicates reporting resources and configures measurement reference signal associated with the reporting. The UE feeds back the measurement result on Physical Uplink Control Channel (PUCCH) or Physical Uplink Shared Channel (PUSCH) through layer 1 signaling. Each feedback provides either a single measurement result of one or several beams, or an average value of measurements taken at multiple time instances.

In the model monitoring process, in order to ensure robustness of model monitoring, the performance of the AI/ML model may be determined based on multiple monitoring results of the AI/ML model over a period of time. According to the existing layer 1 beam reporting process, each time the UE measures a beam set (such as the Top-K beams inferred by the model) used for model monitoring, it will feedback to the base station through layer 1 signaling. However, model monitoring determines the performance of the model based on the monitoring results over a period of time, and the latency requirements are lower than other layer 1 measurements. On the other hand, multiple measurement results of the UE may be similar, and the results of model monitoring are also similar. If all these similar results are reported to the base station, information redundancy may be caused and reporting overhead may be wasted.

It is to be noted that since model monitoring is to determine the performance of the model based on the monitoring results over a period, model monitoring can be understood or replaced by performance monitoring.

In view of this, one embodiment of the present disclosure proposes a performance monitoring method. During the performance monitoring process, the UE reports measurement results of multiple performance monitoring together. Further, the UE can filter the measurement results and report filtered out measurement results used for performance monitoring. This method can reduce unnecessary reporting overhead while ensuring completion of the performance monitoring function.

The following describes the performance monitoring method, UE and network device provided by the embodiments of the present disclosure in conjunction with the accompanying drawings.

Referring to FIG. 4, it is a flow chart of a performance monitoring method according to an embodiment of the present disclosure. As shown in FIG. 4, the performance monitoring method includes the following steps:
Step 401: determining, by a UE, whether a reporting condition of monitoring-related information of a first model is satisfied;
Step 402: when the reporting condition is satisfied, reporting, by the UE, the monitoring-related information of the first model, to the network device.

In the embodiment of the present disclosure, the first model can be deployed on the UE side or on the network device side. Regardless of which side the first model is deployed on, the network device needs to monitor the first model based on the information reported by the UE.

The monitoring-related information of the first model (referred to as model monitoring-related information or performance monitoring-related information) can be understood as information required to monitor the first model, such as a measurement result of the UE, a prediction result of the model, or a comparison result of the two. The content of the performance monitoring-related information reported by the UE to the network device may vary depending on different deployment locations of the first model and different monitoring indicators of the first model.

In the embodiment of the present disclosure, the UE determines whether the reporting condition of the monitoring-related information of the first model is satisfied; if the reporting condition is satisfied, the UE reports the monitoring-related information of the first model to the network device. Through the above process, if the reporting condition of the monitoring-related information of the first model is satisfied, the UE reports the performance monitoring-related information to the network device, so that the UE can report related information of multiple performance monitoring to the network device together, which can reduce the reporting overhead of the UE during the performance monitoring process.

In the embodiment of the present disclosure, before the reporting condition is satisfied, the UE can store the performance monitoring-related information (such as measurement results) that needs to be reported. When the reporting condition is satisfied, the UE reports the stored performance monitoring-related information to the network device together.

In some embodiments, the method further includes:
when the UE stores a measurement result of an L-th measurement, if a required storage space exceeds a remaining storage space of the UE, discarding, by the UE, a stored earliest measurement result and storing the measurement result of the L-th measurement.

In the embodiment of the present disclosure, satisfying the reporting condition can be understood as the UE being triggered to report the performance monitoring-related information. There may be following three triggering modes:
Mode 1: periodic reporting or semi-persistent reporting configured by the network device;
Mode 2: event trigger reporting;
Mode 3: aperiodic reporting triggered by network devices.

The mode 2 is that when a certain event occurs (or after it occurs), the UE reports performance monitoring-related information. The mode 3 is applicable when the network device detects that the system performance indicators (such as throughput, beam failure probability) have deteriorated, and the network device triggers the UE to aperiodically report performance monitoring-related information.

The reporting mechanisms under the above modes reduce unnecessary reporting of the UE and save reporting overhead.

After the UE reports the performance monitoring-related information through the above modes 1 to 3, the network device can perform the performance monitoring of the first model. For example, the network device can calculate a monitoring index for the first model according to the performance monitoring-related information reported by the UE. The network device can determine the performance of the model based on the calculation result, and perform corresponding processing based on the determination result, such as activating the model, deactivating the model, and falling back to the traditional beam management method.

In some embodiments, the method further includes:
determining, by the UE, according to first information transmitted by the network device, the reporting condition of the monitoring-related information of the first model; where the first information is used to indicate at least one of the following:
a monitoring-reporting period of the first model;
a monitoring start time of the first model;
a first preset condition that a prediction result of the first model needs to satisfy.

In this implementation, the reporting condition of the performance monitoring-related information may be indicated to the UE via the first information transmitted by the network device.

In some embodiments, the method further includes:
determining, by the UE, the reporting condition of the monitoring-related information of the first model, according to a predefined performance monitoring-related parameter; where the performance monitoring-related parameter includes at least one of the following:
a monitoring-reporting period of the first model;
a monitoring start time of the first model;
a first preset condition that a prediction result of the first model needs to satisfy.

In this implementation, when the performance monitoring-related parameter is predefined (such as agreed upon in the protocol), the UE may also determine the reporting conditions of the performance monitoring-related information based on the predefined performance monitoring-related parameter.

In some embodiments, the reporting condition includes at least one of the following:
a reporting moment of the monitoring reporting period of the first model arrives (corresponding to the triggering mode of the mode 1);
the UE receiving reporting trigger information from the network device, where the reporting trigger information is used to indicate reporting of the monitoring-related information of the first model (corresponding to the triggering mode of the mode 3);
the UE detecting that a prediction result of the first model satisfies the first preset condition (corresponding to the triggering mode of the mode 2).

In the event-triggered reporting mode (i.e., the mode 2), the event that triggers the reporting may be, for example, that the model performance is lower than a certain predetermined condition (such as the prediction result of the model satisfies the first preset condition). That is, when the model performance is lower than a certain predetermined condition, the UE reports the performance monitoring-related information to the network device.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

It is to be noted that the first preset condition can be configured or indicated by the network device (such as indicated by the first information) or predefined (such as agreed upon in a protocol).

In some embodiments, the monitoring-related information reported by the UE includes at least one of the following:
measurement results of N measurements performed by the UE on the reference signal, where N is an integer greater than 1;
prediction results of N predictions of the first model; where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

As mentioned above, the content of the monitoring-related information reported by the UE may vary depending on different deployment locations of the model and different performance monitoring indicators of the first model. For example, when the model is deployed on the UE side, the monitoring-related information reported by the UE may include the UE's measurement results and the model's prediction results, etc.; or, the UE's measurement results, the model's prediction results, and comparison results of the two, etc.; or, the model's identifier information. When the model is deployed on the network device side, the monitoring-related information reported by the UE may include the UE's measurement results.

The UE's measurement result can be obtained by measuring a reference signal transmitted by the network device. For example, the network device transmits a reference signal on a full set of beams, or the network device transmits a reference signal on the optimal K beams predicted by the model.

In some embodiments, the N measurements are all measurements of the UE; or, the N measurements are selected by the UE from all measurements; or, the N measurements are corresponding to N predictions selected by the UE from all predictions of the first model.

The UE can report measurement results of all measurements to the network device, or report filtered measurement results to the network device, or report filtered model prediction results to the network device. In other words, both the measurement results and prediction results used for performance monitoring can be filtered results. One way is that the UE reports all measurement results (and/or model prediction results), and the network device filters them; another way is that the UE performs the filtering, and the UE only reports the filtered measurement results (and/or model prediction results).

In some embodiments, the N measurements selected by the UE from all measurements include at least one of the following:
a first measurement within the monitoring reporting period of the first model;
a first measurement starting from the monitoring start time of the first model;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.
The values of the above thresholds can be configured by the network device or pre-agreed.

In some embodiments, the N predictions selected by the UE from all predictions of the first model include at least one of the following:
a first prediction within the monitoring and reporting period;
a first prediction starting from the monitoring start time;
a prediction whose prediction result differs from that of a previous prediction;
a prediction where a difference between its prediction result maximum value and a prediction result maximum value of a previous prediction is greater than a ninth threshold;
a prediction where a difference between its prediction result minimum value and a prediction result minimum value of a previous prediction is greater than a tenth threshold;
a prediction where a difference between its prediction result average value and a prediction result average value of a previous prediction is greater than an eleventh threshold;
a prediction where a difference between its prediction result standard deviation and a prediction result standard deviation of a previous prediction is greater than a twelfth threshold;
a prediction where a difference between its prediction result variance and a prediction result variance of a previous prediction is greater than a thirteenth threshold.

The values of the above thresholds can be configured by the network device or pre-agreed.

In some embodiments, the UE uses a bit map to indicate measurement orders of the N measurements in all measurements, or indicate measurement identifier information of the N measurements.

For example, it is assumed that the UE completes 100 measurements on the reference signal within the monitoring reporting period of T ms and finally the UE reports 30 measurement results, the UE can use a bitmap to indicate that the reported 30 measurement results correspond to which 30 of the 100 measurements.

In some embodiments, the reporting, by the UE, the monitoring-related information of the first model, to the network device, includes:
reporting, by the UE, the monitoring-related information of the first model to the network device on a first resource;
where the first resource includes any of the following:
   a resource configured by the network device for reporting the monitoring-related information of the first model;
   PUSCH resources already available to the UE;
   PUSCH resources requested by the UE through a Scheduling Request (SR).

In this implementation, the resource used for UE reporting may be determined in the following manner:
a) if a reporting resource is configured by the network device, the UE reports the measurement results on a resource configured by the network device;
b) if a reporting resource is not configured by the network device and the UE has available PUSCH resource, the UE may report information on the available PUSCH resource, such as configured grant uplink resource;
c) if a reporting resource is not configured by the network device and the UE does not have available PUSCH resource, the UE can request PUSCH resource through SR; after the network device schedules PUSCH resources, the UE reports the stored measurement results on the PUSCH resources scheduled by the network device.

The specific implementation processes of various performance monitoring solutions involved in the embodiments of the present disclosure are described below.

Solution 1: assuming the model is deployed on the base station side.
Step 1-1: a base station configuring a performance monitoring reporting period T.
Step 1-2: the base station transmits a reference signal for performance monitoring, such as transmitting a reference signal on Top-K beams inferred by the model.
Step 1-3: if the base station transmits the reference signal on the Top-K beams inferred by the model, the base station storing a result of the model inference, such as L1-RSRP predicted values of the Top-K beams.
Step 1-4: UE measuring the reference signal transmitted by the base station and storing L1-RSRP of the measured reference signal.

Repeating the above steps 1-1 to 1-4 until the time reaches a reporting moment of the reporting period T.

Step 1-5: the UE reporting the measurement results stored in T; where the content reported by the UE corresponds to L1-RSRP measurement values of Top-K beams which is predicted by the model and on which reference signals are transmitted, within the time period T. The resource used for the UE reporting can be determined as follows:
a) if the reporting resource is configured by the base station, the UE reports the measurement results within the time T on the resource configured by the base station;
b) if a reporting resource is not configured by the base station, the UE reports the measurement results within the time T on an available PUSCH resource or PUSCH resource requested through an SR.

Step 1-6: after receiving the measurement results reported by the UE, the base station calculating a performance monitoring indicator:
a) the base station calculating an average of absolute values of differences between L1-RSRP predicted values of the Top-K beams stored within the time T and measured values reported by the UE; or,
b) the base station selects results for calculating the performance monitoring indicator according to reported results of the UE, and the selection manner may include the following manners:
   i. if this measurement is a first measurement in the reporting period, selecting the result of this measurement;
   ii. if it is not the first measurement, the base station determining whether there is a measurement result with a differing L1-RSRP value between this measurement reported by the UE and a previously reported measurement; if such a difference exists, the base station selects the result of this measurement;
   iii. the base station determines whether a difference between the maximum values, minimum values or average values of reference signal qualities measured in this measurement and the previous measurement is greater than X dB; if so, the result of this measurement is selected;
   iv. the base station determines whether a difference between a standard deviation/variance of reference signal qualities measured in this measurement and a standard deviation/variance of reference signal qualities measured in a previous measurement is greater than YdB or Y%; if so, the measurement result of this measurement is selected.

The base station selects, from stored inference results, an inference result corresponding to the measurement result selected according to the above principle, and calculates an average value of absolute values of differences between L1-RSRP predicted values of the Top-K beams and measurement values reported by the UE, based on the selected inference result and the selected measurement result.

Step 1-7: the base station determining performance of the base station side model based on the performance monitoring indicator (or model monitoring indicator), and performing operations such as model activation, model deactivation, or fallback to the traditional beam management method:
a) if a calculated monitoring indicator value of one model is less than a monitoring indicator value of another model, the model corresponding to the smaller monitoring indicator value is activated, and the model corresponding to the larger monitoring indicator is deactivated;
b) if a calculated monitoring indicator value of one model is greater than a threshold, the model is deactivated or falls back to the traditional beam management method.

Solution 2: assuming the model is deployed on the base station side.

Step 2-1: being the same as step 1-1 in the solution 1.

Step 2-2: being the same as step 1-2 in the solution 1.

Step 2-3: being the same as step 1-3 in the solution 1.

Step 2-4: UE measuring the reference signal transmitted by the base station and determining whether a result of this measurement result needs to be stored:
a) if this measurement is the first measurement in the reporting period, the UE stores the result;
b) if this measurement is not the first measurement, the UE determines whether there is a measurement result with a differing L1-RSRP value between this measurement and a previously measurement; if so, the UE stores the result;
   or, the UE determines whether a difference between the maximum values, minimum values or average values of reference signal qualities measured in this measurement and the previous measurement is greater than X dB; if so, the UE stores the result;
   or, the UE determines whether a difference between a standard deviation/variance of reference signal qualities measured in this measurement and a standard deviation/variance of reference signal qualities measured in a previous measurement is greater than YdB or Y%; if so, the UE stores the measurement result.

Repeating the above steps 2-1 to 2-4 until the time reaches a reporting moment of the reporting period T.

Step 2-5: the UE reporting measurement results stored in T; where the content reported by the UE corresponds to L1-RSRP measurement values that satisfy the conditions specified in steps 2-4, of the Top-K beams which are predicted by the model and on which reference signals are transmitted, within the period T, as well as which specific measurements within T these results correspond to. The UE may perform reporting on an available PUSCH resource or PUSCH resource requested through an SR.

Step 2-6: after receiving the measurement result reported by the UE, the base station selects a model inference result corresponding to the measurement result reported by the UE, from the stored model inference results according to the reporting information of the UE, and calculates a performance monitoring indicator. For example, the base station calculates an average of absolute values of differences between L1-RSRP predicted values of Top-K beams stored within time T and the measurement values reported by the UE.

Steps 2-7: being the same as steps 1-7 in the solution 1.

Solution 3: assuming the model is deployed on the UE side.

Step 3-1: a base station configuring a performance monitoring reporting period T.

Step 3-2: the base station transmitting a reference signal for performance monitoring. For example, the reference signal is transmitted on the Top-K beams inferred by the model, and the model inference result is reported to the base station by the UE.

Step 3-3: the UE measuring the reference signal transmitted by the base station and storing measurement results and corresponding model inference results. The UE can store part of the measurement results and the inference results according to the following way:
a) the UE determining whether a result of this measurement needs to be stored, and also storing the model inference result corresponding to the stored measurement result:
   i. if this measurement is a first measurement in the reporting period, the UE stores the result;
   ii. if it is not the first measurement, the UE determines whether there is a measurement result with a differing L1-RSRP between this measurement and a previous measurement; if so, the UE stores the result;
      or, the UE determines whether a difference between the maximum values, minimum values or average values of reference signal qualities measured in this measurement and the previous measurement is greater than X dB; if so, the UE stores the result;
      or, the UE determines whether a difference between a standard deviation/variance of reference signal qualities measured in this measurement and a standard deviation/variance of reference signal qualities measured in a previous measurement is greater than YdB or Y%; if so, the UE stores the measurement result;
b) the UE determines whether the inference result needs to be stored, and also stores the measurement result corresponding to the stored inference result:
   i. if the inference result is a first inference within the reporting period, the UE stores the inference result;
   ii. if it is not the first inference, the UE determines whether there is a prediction result with a differing L1-RSRP between this prediction and a previous prediction; if so, the UE stores the result;
      or, the UE determines whether a difference between the maximum values, minimum values or average values of the reference signal L1-RSRP prediction values in this inference and a previous inference is greater than X dB; if so, the UE stores the inference result;
      or, the UE determines whether a difference between a standard deviation/variance of L1-RSRP prediction values of the reference signal inferred this time and a standard deviation/variance of L1-RSRP prediction values of the reference signal inferred last time is greater than Y dB or Y%; if so, the UE stores the measurement inference result this time.

The UE stores the measured L1-RSRP value and the inferred L1-RSRP value selected according to the manner a) or manner b), or stores a difference between a selected measured L1-RSRP value and an inferred L1-RSRP value.

Repeating the above steps 3-1 to 3-3 until the time reaches a reporting moment of the reporting period T.

Step 3-4: the UE reports the results stored in T, where the content reported by the UE corresponds to the measurement results and inference results that meet the conditions in the step 3-3 within the time T, or reports differences between the measurement results and the inference results. The UE can perform reporting on an available PUSCH resource or PUSCH resource requested through an SR.

Step 3-5: after receiving the measurement results reported by the UE, the base station calculates a performance monitoring indicator:
a) if the UE reports the measurement result and the inference result, the base station calculates an average of absolute values of differences between reported predicted values of and measured values of L1-RSRP;
b) if the UE reports differences between the measurement results and the inference results, the base station calculates an average of absolute values of the differences.

Step 3-6: the base station determines the UE-side model performance based on the performance monitoring indicators, and performs operations such as model activation, model deactivation, or fallback to the traditional beam management method:
a) if the performance monitoring indicator value calculated according to the step 3-5 is less than another performance monitoring indicator value, activating the model corresponding to the performance monitoring indicator of a smaller value and deactivating the model corresponding to the performance monitoring indicator of a larger value;
b) if the performance monitoring indicator value calculated according to the step 3-5 is greater than a threshold, deactivating the model or falling back to the traditional beam management method.

Solution 4: assuming the model is deployed on the UE side.

Step 4-1: a base station configuring a performance monitoring reporting period T.

Step 4-2: the base station transmitting a reference signal for performance monitoring, such as transmitting a reference signal on a beam of SetA.

Step 4-3: the UE measures the reference signal transmitted by the base station and makes the following judgments based on measurement results and corresponding inference results:
a) whether Top-1 beam inferred by the model belongs to actual Top-K beam; or,
b) whether Top-K beams inferred by the model include actual Top-1 beam;

Where the above actual Top-1 beam is a beam corresponding to the maximum L1-RSRP measurement value in the reference signals transmitted on the SetA beams; the actual Top-K beams are beams corresponding to Top-K L1-RSRP measurement values in the reference signals transmitted on the SetA beams;
if not included, the count is increased by 1.

Repeating the above steps 4-1 to 4-3 until the time reaches a reporting moment of the reporting period T.

Step 4-4: the UE reports the number of times that the Top-1 beam inferred by the model in T does not belong to actual Top-K beams, or the number of times that Top-K beams inferred by the model do not include an actual Top-1 beam. A resource used for the UE reporting can be determined as follows:
a) if the reporting resource is configured by the base station, the UE reports the results on the resource configured by the base station;
b) if the reporting resource is not configured, the UE reports information on an available PUSCH resource or PUSCH resource requested through an SR

Step 4-5: after receiving the measurement results reported by the UE, the base station calculates a performance monitoring indicator:
a) if the UE reports the number of times that the Top-1 beam inferred by the model does not belong to the actual Top-K beams, the base station calculates a model prediction accuracy (which can be expressed as Top-1/K%) based on the number of times reported by the UE and the number of times that the SetA reference signal is transmitted within T;
b) if the UE reports the number of times that the Top-K beams inferred by the model do not include the actual Top-1 beam, the base station calculates a model prediction accuracy (which can be expressed as Top-K/1%) based on the number of times reported by the UE and the number of times that the SetA reference signal is transmitted within T.

Step 4-6: the base station determines the UE-side model performance based on the performance monitoring indicator, and performs operations such as model activation, model deactivation, or fallback to the traditional beam management method, which is the same as the step 3-6 in the solution 3.

Solution 5: assuming the model is deployed on the UE side.

Step 5-1: a base station indicates a performance monitoring start time.

Step 5-2: the base station transmits a reference signal for performance monitoring, such as transmitting a reference signal on Top-K beams of SetA or inferred by the model.

Step 5-3: the UE measuring the reference signal transmitted by the base station, and performs the following operations based on measurement results and corresponding inference result:
a) determining whether a Top-1 beam inferred by the model belongs to actual Top-K beams; or,
b) determining whether Top-K beams inferred by the model include an actual Top-1 beam;
   where the above actual Top-1 beam is a beam corresponding to the maximum L1-RSRP measurement value in the reference signal transmitted on the SetA beam; the actual Top-K beams are beams corresponding to the Top-K L1-RSRP measurement values in the reference signal transmitted on the SetA beam;
   if not included, the count is increased by 1; or,
c) calculating differences between predicted values and measured values of L1-RSRP of Top-K beams inferred by the model.

Repeating the above steps 5-1 to 5-3 until the following conditions are met, and then execute step 5-4.

Step 5-4: UE reports information to the base station:
a) if the UE performs calculation according to a) in the step 5-3, when the number of times that the Top-1 beam inferred by the model does not belong to the actual Top-K beams, is greater than or equal to N times, the UE reports the information;
b) if the UE performs calculation according to b) in the step 5-3, when the number of times that Top-K beams inferred by the model do not include an actual Top-1 beam is greater than or equal to N times, the UE reports the information;
c) if the UE performs calculation according to c) in the step 5-3, when an average absolute value of differences between the predicted values and the measured values of L1-RSRP of Top-K beams inferred by the model is greater than W dB, the UE reports the information.

In addition, the content reported by the UE may include a model ID that meets the above conditions, and may also include a specific value of the performance monitoring indicator, such as reporting an average of absolute values of differences between predicted values and measured values of L1-RSRP of Top-K beams inferred by the model.

The UE can perform reporting on an available PUSCH resource or PUSCH resource requested through an SR.

Step 5-5: the base station determines the UE-side model performance based on the results reported by the UE, and performs operations such as model activation, model deactivation, or fallback to the traditional beam management method, which is the same as the step 3-6 in the solution three.

Solution 6: assuming the model is deployed on the UE side.

Step 6-1: a base station indicating a performance monitoring start time.

Step 6-2: the base station transmitting a reference signal for performance monitoring, such as transmitting a reference signal on Top-K beams inferred by the model.

Step 6-3: the UE measuring the reference signal transmitted by the base station and determining whether a measurement result and an inference result need to be stored:
a) the UE determines whether a result of this measurement needs to be stored, and also stores a model inference result corresponding to the stored measurement result:
   i. if this measurement is a first measurement in the reporting period, the UE stores the result;
   ii. if it is not the first measurement, the UE determines whether there is a measurement result with a differing L1-RSRP between this measurement and a previous measurement; if so, the UE stores the result;
      or, the UE determines whether a difference between the maximum values, minimum values or average values of reference signal qualities measured in this measurement and the previous measurement is greater than X dB; if so, the UE stores the result;
      or, the UE determines whether a difference between a standard deviation/variance of reference signal qualities measured in this measurement and a standard deviation/variance of reference signal qualities measured in a previous measurement is greater than YdB or Y%; if so, the UE stores the measurement result;
      or, b) the UE determines whether the current inference result needs to be stored, and also stores a performance monitoring measurement result corresponding to the stored inference result:
         i. if the inference result is a first inference within the reporting period, the UE stores the inference result;
         ii. if it is not the first inference, the UE determines whether there is a prediction result with a differing L1-RSRP between this prediction and a previous prediction; if so, the UE stores the inference result;
            or, the UE determines whether a difference between the maximum values, minimum values or average values of the reference signal L1-RSRP prediction values in this inference and a previous inference is greater than X dB; if so, the UE stores the inference result;
            or, the UE determines whether a difference between a standard deviation/variance of L1-RSRP prediction values of the reference signal inferred this time and a standard deviation/variance of L1-RSRP prediction values of the reference signal inferred last time is greater than Y dB or Y%; if so, the UE stores the inference result.

The UE stores the measured L1-RSRP value and the inferred L1-RSRP value selected according to the manner a) or manner b), or stores a difference between a selected measured L1-RSRP value and an inferred L1-RSRP value.

Repeating the above steps 6-1 to 6-3.

Step 6-4: if storing a certain result exceeds the UE's maximum storage capacity, the UE discarding an earliest result among the stored results and storing this result.

Step 6-5: when the system performance indicators monitored by the base station (such as throughput rate and beam failure probability) deteriorate, the base station triggering the UE to report performance monitoring relevant results, and then determining whether the system performance deterioration is caused by the degradation of model performance.

Step 6-6: after receiving an aperiodic reporting signaling triggered by the base station, the UE reporting the stored result. The UE can report the stored results on an available PUSCH resource or PUSCH resource requested through the SR.

Step 6-7: after receiving the measurement results reported by the UE, the base station calculates a performance monitoring indicator, which is the same as the step 3-5 in the solution three.

Step 6-8: the base station determining the UE-side model performance based on the performance monitoring indicators, and performing operations such as model activation, model deactivation, or fallback to the traditional beam management method, which is the same as the step 3-6 in the solution three.

In order to better understand the technical solutions of the embodiments of the present disclosure, specific embodiments are provided hereinafter for exemplary description.

### Embodiment 1 (corresponding the solution 1)

In this embodiment, an AI/ML model is deployed on the base station side for spatial prediction. The AI/ML model predicts an optimal beam in SetA beams based on measurement results of SetB beams. The input of the AI/ML model is L1-RSRP of SetB beams, and the output is predicted RSRP of all beams in SetA. SetA includes 32 transmit beams, SetB includes 8 transmit beams, and SetB is a subset of SetA.

The base station periodically transmits a reference signal corresponding to the SetB beam. After the UE feeds back the L1-RSRP of the SetB beam, the base station performs inference to obtain predicted L1-RSRP of the 32 beams of SetA, and takes three beams with the largest predicted L1-RSRP values as the Top-3 beams. The base station transmits a reference signal corresponding to the Top-3 beams inferred by the AI/ML model, and the UE measures L1-RSRP of the Top-3 beams. The reference signal corresponding to the Top-3 beams transmitted by the base station may only be Top-3 reference signals of a certain inference result, and there is no need to monitor results of each inference. For example, the base station transmits a reference signal corresponding to the inferred Top-3 beams at regular intervals, or the base station transmits the reference signal corresponding to the inferred Top-3 beams only when the current model inference result is significantly different from the previous inference result.

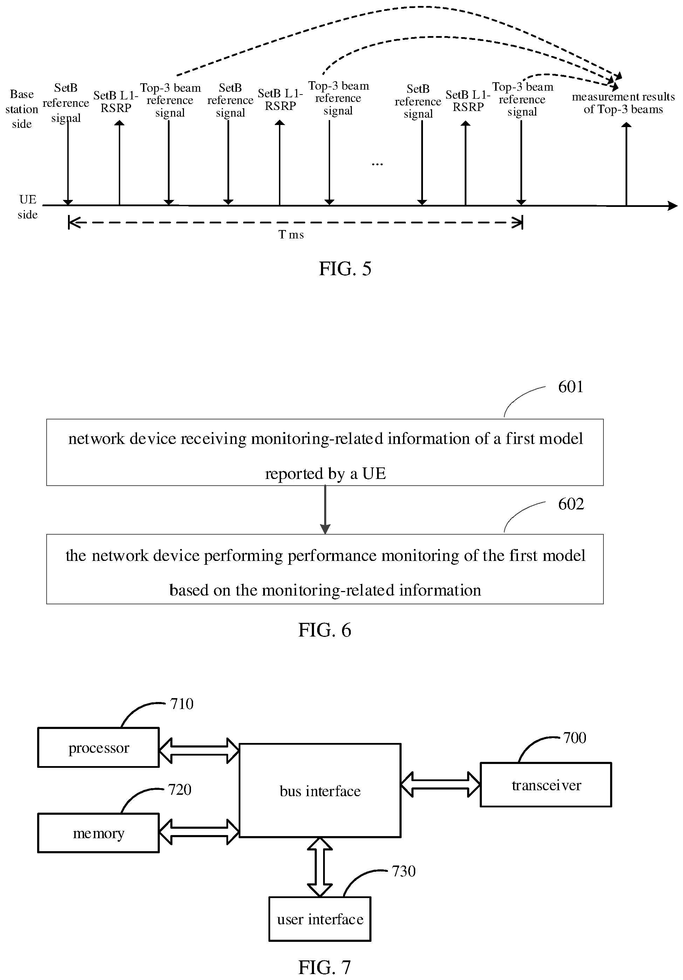

It is assumed that the performance monitoring indicator is differences between the measured values and predicted values of L1-RSRP of Top-3 beams predicted by the AI model. The base station configures for the UE a reporting period of T ms, where a reporting content is L1-RSRP measurement values of a reference signal of Top-3 beams configured by the base station within T ms. The reporting content is carried by Media Access Control-Control Element (MAC-CE) signaling. Within the period T, the base station transmits reference signals corresponding to the Top-3 beams inferred by the model for a total of 100 times, and stores L1-RSRP predicted values of these Top-3 beams from the 100 model inferences. After each T ms measurement is completed, if the UE already has an available PUSCH resource, the UE performs reporting on the available PUSCH resource, such as configured grant uplink resource; if the UE does not have PUSCH resources, the UE requests PUSCH resource through SR. After the base station schedules a PUSCH resource, the UE reports L1-RSRP measurement values from 100 measurements of the reference signals for the Top-3 beams measured within T ms, on the PUSCH resource scheduled by the base station, as shown in FIG. 5.

After receiving the L1-RSRP measurement values of the reference signal for the Top-3 beams within the Tms reported by the UE, the base station selects results with different L1-RSRP measurement values for the Top-3 beams. If L1-RSRP of a group of Top-3 beams is the same as L1-RSRP of a previous group of Top-3 beams, the group of measurement results is discarded, otherwise the group of measurement results are retained. It is assumed that the base station finally selects 30 measurement results from the 100 Top-3 beam measurement results for the Top-3 beams. The base station selects model inference results corresponding to the 30 retained measurement results from the 100 stored model inference results, calculates differences between L1-RSRP prediction values and measurement values for the Top-3 beams based on these 30 measurement results and the inference results, and judges the performance of the AI/ML model. For example, when an average of absolute values of the differences between the L1-RSRP prediction values and the measurement values for these 30 Top-3 beams is greater than 1dB, it is considered that the performance of the current AI model has deteriorated and the AI model is deactivated.

### Embodiment 2 (corresponding to the solution 2)

In this embodiment, an AI/ML model is deployed on the base station side for spatial prediction, and the input and output of the AI/ML model are the same as those in the embodiment 1.

The base station periodically transmits a reference signal corresponding to the SetB beam. After the UE feeds back L1-RSRP of the SetB beam, the base station infers and obtains predicted L1-RSRP of 32 beams of SetA, and takes three beams with the largest predicted L1-RSRP values as the Top-3 beams. The base station transmits a reference signal corresponding to the Top-3 beams inferred by the AI/ML model, and the UE measures the L1-RSRP for the Top-3 beams. Each time the UE measures the L1-RSRP for the Top-3 beams, the UE determines whether the current measurement result is consistent with a previous measurement result for the Top-3 beams. If they are consistent, the current measurement result is not stored. If they are inconsistent, the current result is stored.

Each time the measurement in the T ms is completed, the UE reports the stored measurement results and indicates which measurements within Tms the measurement results reported by the UE correspond to. For example, if the UE completes 100 measurements for the Top-3 beams within T ms, and finally the UE reports 30 measurement results, a bitmap can be used to indicate which 30 of the 100 measurements the 30 measurement results reported to the base station correspond to.

If the UE already has an available PUSCH resource, the UE performs reporting on the available PUSCH resource, such as a configured grant uplink resource; if the UE does not have PUSCH resources, the UE requests a PUSCH resource through SR. After the base station schedules a PUSCH resource, the UE reports the stored measurement results on the PUSCH resource scheduled by the base station.

After receiving the 30 measurement results reported by the UE, the base station selects model inference results corresponding to the 30 measurement results from the stored model inference results, calculates an average difference between L1-RSRP prediction values and measured values for the Top-3 beams, based on the 30 measurement results and the inference results, and judges the performance of the AI/ML model. For example, when an average of absolute values of the differences between L1-RSRP prediction values and the measured values for the 30 Top-3 beams is greater than 1dB, it is considered that the performance of the current AI model has deteriorated and the AI model is deactivated.

### Embodiment 3 (corresponding to the solution 4)

In this embodiment, an AI/ML model is deployed on the UE side for spatial prediction. The AI/ML model predicts an optimal beam in SetA beams based on measurement results of SetB beams. The input of the AI/ML model is L1-RSRP of SetB beams, and the output is predicted RSRP of all beams in SetA. SetA includes 32 transmit beams, SetB includes 8 transmit beams, and SetB is a subset of SetA.

The base station periodically transmits reference signals corresponding to the SetB beam and the SetA beam, and the period of the reference signal corresponding to the SetA beam can be different from the period of the reference signal corresponding to the SetB beam. The UE measures the L1-RSRP of the SetB reference signal, and the input of the AI/ML model is the L1-RSRP of SetB for inference, and the output is predicted Top-3 beams in the SetA beam set. The UE feeds back index values corresponding to the inferred Top-3 beams to the base station. The UE measures L1-RSRP of the SetA reference signal, determines an actual Top-1 beam based on the measurement result of SetA, and determines whether the Top-3 beams inferred by the corresponding model include the actual Top-1 beam. An index of the reference signal with the largest L1-RSRP measurement value in the SetA beam reference signal is an index value corresponding to the actual Top-1 beam.

Every Tms, the UE feeds back to the base station the number of times, within the measurement results of the Top-3 beams over the T ms period, that the Top-3 beams inferred by the model do not include the actual Top-1 beam. If the UE already has an available PUSCH resource, the UE performs reporting on the available PUSCH resource, such as a configured grant uplink resource; if the UE does not have PUSCH resource, the UE requests a PUSCH resource through SR. After the base station schedules a PUSCH resource, the UE performs reporting on the PUSCH resource scheduled by the base station.

Upon receiving the UE's report on the number of times that the Top-3 beams predicted by the UE-side model do not include the actual Top-1 beam within T ms, the base station calculates the model's prediction accuracy. For example, the number of times reported by the UE is 30, and 100 SetA measurements are completed within Tms, then the accuracy is 70%. The base station determines that the model accuracy is lower than a threshold (such as 80%) and deactivates the current AI model.

### Embodiment 4 (corresponding to the solution 5)

In this embodiment, an AI/ML model is deployed on the UE side for spatial prediction. The AI/ML model predicts an optimal beam in SetA beams based on measurement results of SetB beams. The input of the AI/ML model is L1-RSRP of SetB beams, and model output is index values corresponding to top-2 beams in SetA. SetA includes 32 transmit beams, SetB includes 8 transmit beams.

The base station instructs the UE to start performance monitoring, such as instructing the UE to start a timer for performance monitoring. The performance monitoring indicator is a Top-K/1 beam prediction accuracy (i.e., a probability that predicted Top-K beams include an actual Top-1 beam). The base station periodically transmits reference signals corresponding to the SetB and SetA beams. The UE measures L1-RSRP of the SetB reference signal. An index of the reference signal with the highest L1-RSRP measurement value among the SetA beam reference signals is an index value corresponding to the actual Top-1 beam. The UE determines whether the index values corresponding to the Top-2 beams predicted by the model include the index value corresponding to the actual Top-1 beam. If not, the UE increments a counter by 1. Before the performance monitoring timer expires (expiration time of the timer is configured by the base station or specified by the protocol), if the number of times that the Top-2 beams inferred by the model do not include the actual Top-1 beam reaches 10, the UE reports a MAC-CE to inform the base station that the number of times that the Top-2 beams inferred by the model do not include the actual Top-1 beam reaches 10 times, as shown in FIG. 5.

If multiple AI/ML models for spatial beam prediction are deployed on the UE side, and in performance monitoring, in addition to monitoring the performance of the currently activated AI/ML model, the UE also tests the performance of other inactivated models for spatial beam prediction, then IDs of other inactivated AI/ML models can be reported in MAC-CE. The performance of the reported inactivated AI/ML model meets that the Top-2/1 beam prediction accuracy is greater than a threshold or is better than the activated AI/ML model within the monitoring time. After receiving the MAC-CE reported by the UE, the base station determines the performance of the AI/ML model and decides whether to deactivate the current model and whether to activate other AI/ML models reported in the MAC-CE that meet the Top-2/1 beam prediction accuracy threshold requirement.

### Embodiment 5 (corresponding to the solution 6)

In this embodiment, an AI/ML model is deployed on the UE side for spatial prediction, and it is assumed that the input, output, and performance monitoring indicators of the AI/ML model are the same as those in the embodiment 1.

The base station periodically transmits a reference signal corresponding to the SetB beam. The UE measures L1-RSRP of the SetB reference signal and then performs inference to obtain predicted L1-RSRP for 32 beams of SetA, and takes three beams with the largest predicted L1-RSRP values as the Top-3 beams. The UE feeds back index values corresponding to the Top-3 beams to the base station. For certain inference results, the base station transmits a reference signal corresponding to the Top-3 beams inferred by the AI/ML model, and the UE measures L1-RSRP for the Top-3 beams. Each time the UE measures the L1-RSRP of the Top-3 beams, the UE determines whether a current measurement result is consistent with a previous measurement result for the Top-3 beams. If they are consistent, the current measurement result is not stored. If they are inconsistent, the current measurement result is stored. If storing a certain measurement result exceeds the storage capacity of the UE, the UE discards an earliest measurement result and saves the current measurement result.

The base station triggers the UE to perform aperiodic reporting through MAC-CE signaling, and the reported content is L1-RSRP prediction values and measurement values of the Top-3 beams inferred by the model stored in the UE. The reported content is carried through MAC-CE signaling or Radio Resource Control (RRC) signaling. If the UE already has an available PUSCH resource, the UE performs reporting on the available PUSCH resource, such as a configured grant uplink resource; if the UE does not have PUSCH resources, the UE requests a PUSCH resource through SR. After the base station schedules a PUSCH resource, the UE performs reporting on the PUSCH resource scheduled by the base station.

After receiving the results reported by the UE, the base station calculates a difference between an average L1-RSRP prediction value and the measured value of the top-3 beams to determine the performance of the AI/ML model. The base station can trigger aperiodic reporting on demand. For example, when the network performance indicators are good, the base station may not trigger reporting; when the network performance indicators decline, the base station may trigger aperiodic reporting to monitor the performance of the AI/ML model in the recent period of time, so as to determine whether the AI/ML model causes the network performance to decline.

The embodiments of the present disclosure focus on how a UE reports multiple performance monitoring-related information to assist the base station side in evaluating the performance of either the base station-side model or the UE-side model. The embodiments propose that the UE feedbacks multiple performance monitoring-related information (such as measurement results of multiple measurements) together, which can reduce the feedback overhead for the UE. The embodiments also propose that the performance monitoring-related information reported by the UE can be obtained after filtering based on certain criteria, which can further reduce the UE's feedback overhead and lower the computational resource consumption at the base station. The embodiments further propose that the base station selects corresponding information from the performance monitoring-related information reported by the UE to calculate the performance monitoring indicators. The embodiments further propose that the base station determines whether to trigger aperiodic reporting of performance monitoring-related information by the UE based on whether monitored system performance indicators have deteriorated, thereby helping to determine if the system performance degradation is caused by a decline in model performance.

In summary, according to the embodiments of the present disclosure, unnecessary overhead can be reduced while ensuring the completion of the performance monitoring function, thereby improving the performance of the model applied to the communication network.

Referring to FIG. 6, it is a flow chart of a performance monitoring method according to an embodiment of the present disclosure. As shown in FIG. 6, the performance monitoring method includes the following steps:

Step 601: receiving, by a network device, monitoring-related information of a first model reported by a UE;

Step 602: performing, by the network device, performance monitoring of the first model based on the monitoring-related information.

In some embodiments, the method further includes:
transmitting, by the network device, first information to the UE, where the first information is used to indicate at least one of the following:
a monitoring-reporting period of the first model;
a monitoring start time of the first model;
a first preset condition that a prediction result of the first model needs to satisfy.

In some embodiments, the reporting condition is determined by predefined performance monitoring-related parameter, and the performance monitoring-related parameter includes at least one of the following:
a monitoring-reporting period of the first model;
a monitoring start time of the first model;
a first preset condition that a prediction result of the first model needs to satisfy.

In some embodiments, the method further includes:
transmitting, by the network device, reporting trigger information to the UE, where the reporting trigger information is used to instruct reporting of the monitoring-related information of the first model.

In some embodiments, the transmitting, by the network device, reporting trigger information to the UE, includes:
when the network device monitors that a system performance indicator meets a second preset condition, transmitting, by the network device, the reporting trigger information to the UE.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

In some embodiments, the performing, by the network device, performance monitoring of the first model based on the monitoring-related information, includes:
calculating, by the network device, a monitoring indicator of the first model based on the monitoring-related information.

In some embodiments, when the first model is deployed on the network device, the monitoring-related information includes measurement results of N measurements performed by the UE on the reference signal, where N is an integer greater than 1.

The calculating, by the network device, a monitoring indicator of the first model based on the monitoring-related information, includes:
selecting, by the network device, N predictions corresponding to the N measurements from all predictions of the first model;
calculating, by the network device, the monitoring indicator of the first model according to prediction results of the N predictions and the measurement results of the N measurements;
   or,
the calculating, by the network device, a monitoring indicator of the first model based on the monitoring-related information, includes:
   selecting, by the network device, M measurements from the N measurements, where M is an integer greater than 1;
   selecting, by the network device, M predictions corresponding to the M measurements from all predictions of the first model;
   calculating, by the network device, the monitoring indicator of the first model according to the prediction results of the M predictions and the measurement results of the M measurements.

In some embodiments, the M measurements selected by the network device from the N measurements include at least one of the following:
a first measurement within the monitoring reporting period;
a first measurement starting from the monitoring start time;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.
In some embodiments, when the first model is deployed on the UE, the monitoring-related information includes at least one of the following:
measurement results of N measurements performed by the UE on a reference signal, where N is an integer greater than 1;
prediction results of N predictions of the first model, where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

In some embodiments, the receiving, by a network device, monitoring-related information of a first model reported by a UE, includes:
receiving, by the network device, on a first resource, the monitoring-related information of the first model reported by the UE;
where the first resource includes any of the following:
   a resource configured by the network device for reporting the monitoring-related information of the first model;
   PUSCH resources already available to the UE;
   PUSCH resources requested by the UE through a Scheduling Request (SR).

In some embodiments, the method further includes:
performing, by the network device, a first process according to a monitoring indicator of the first model, where the first process includes any one of the following:
activating the first model;
deactivating the first model.

It is to be noted that this embodiment is an implementation of a network device or base station corresponding to the embodiments shown in FIG. 4 to FIG. 5, and its specific implementation can refer to the relevant descriptions of the embodiments shown in FIG. 4 to FIG. 5, which is not repeated here to avoid repeated descriptions, and the same beneficial effects can be achieved.

Referring to FIG. 7, FIG. 7 is a structural diagram of a UE according to an embodiment of the present disclosure. As shown in FIG. 7, the UE includes a memory 720, a transceiver 700 and a processor 710.

The memory 720 is used to store a computer program; the transceiver 700 is used to send and receive data under the control of the processor 710; the processor 710 is used to read the computer program in the memory 720 and perform the following operations:
determining whether a reporting condition of monitoring-related information of a first model is satisfied;
when the reporting condition is satisfied, reporting the monitoring-related information of the first model, to the network device.

In the embodiment of the present disclosure, the UE determines whether the reporting condition of the monitoring-related information of the first model is satisfied; if the reporting condition is satisfied, the UE reports the monitoring-related information of the first model to the network device. Through the above process, if the reporting condition of the monitoring-related information of the first model is satisfied, the UE reports the performance monitoring-related information to the network device, so that the UE can report related information of multiple performance monitoring to the network device together, which can reduce the reporting overhead of the UE during the performance monitoring process.

In FIG. 7, a bus architecture may include any number of interconnected bus and bridge. Specifically, various circuits of one or more processors, which are represented by the processor 710, and one or more memories, which are represented by the memory 720, are linked together. The bus architecture may link various other circuits, such as a peripheral device, voltage regulator and a power management circuit together. These features are well known in this field; therefore, the present disclosure does not make further description on these features. The bus interface provides an interface. The transceiver 700 may be multiple elements, including a transmitter and a receiver and provide units, which communicate with other devices on the transmission medium. The transmission medium includes radio channels, wired channels, optical cables, etc. For different UEs, a user interface 730 may be an interface that can be connected to external or internal devices. The connected devices include but are not limited to a small keyboard, a display, a speaker, a microphone, a joystick, etc.

The processor 710 is responsible for managing the bus architecture and the normal processing. The memory 720 may be used to store data used by the processor 710 for performing operations.

In some embodiments, the processor 710 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the processor 710 is used to read the computer program in the memory and further perform the following operations:
determining, according to first information transmitted by the network device, the reporting condition of the monitoring-related information of the first model; where the first information is used to indicate at least one of the following:
a monitoring-reporting period of the first model;
a monitoring start time of the first model;
a first preset condition that a prediction result of the first model needs to satisfy.

In some embodiments, the processor 710 is used to read the computer program in the memory and further perform the following operations:
determining the reporting condition of the monitoring-related information of the first model according to a predefined performance monitoring-related parameter; where the performance monitoring-related parameter includes at least one of the following:
a monitoring-reporting period of the first model;
a monitoring start time of the first model;
a first preset condition that a prediction result of the first model needs to satisfy.

In some embodiments, the reporting condition includes at least one of the following:
a reporting moment of the monitoring reporting period of the first model arrives;
the UE receiving reporting trigger information from the network device, where the reporting trigger information is used to indicate reporting of the monitoring-related information of the first model;
the UE detecting that a prediction result of the first model satisfies the first preset condition.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

In some embodiments, the monitoring-related information reported by the UE includes at least one of the following:
measurement results of N measurements performed by the UE on the reference signal, where N is an integer greater than 1;
prediction results of N predictions of the first model; where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

In some embodiments, the N measurements are all measurements of the UE; or, the N measurements are selected by the UE from all measurements; or, the N measurements are corresponding to N predictions selected by the UE from all predictions of the first model.

In some embodiments, the processor 710 is used to read the computer program in the memory and perform the following operations:
using a bit map to indicate measurement orders of the N measurements in all measurements through, or indicate measurement identifier information of the N measurements.

In some embodiments, the N measurements selected by the UE from all measurements include at least one of the following:
a first measurement within the monitoring reporting period of the first model;
a first measurement starting from the monitoring start time of the first model;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

In some embodiments, the N predictions selected by the UE from all predictions of the first model include at least one of the following:
a first prediction within the monitoring and reporting period;
a first prediction starting from the monitoring start time;
a prediction whose prediction result differs from that of a previous prediction;
a prediction where a difference between its prediction result maximum value and a prediction result maximum value of a previous prediction is greater than a ninth threshold;
a prediction where a difference between its prediction result minimum value and a prediction result minimum value of a previous prediction is greater than a tenth threshold;
a prediction where a difference between its prediction result average value and a prediction result average value of a previous prediction is greater than an eleventh threshold;
a prediction where a difference between its prediction result standard deviation and a prediction result standard deviation of a previous prediction is greater than a twelfth threshold;
a prediction where a difference between its prediction result variance and a prediction result variance of a previous prediction is greater than a thirteenth threshold.

In some embodiments, the processor 710 is used to read the computer program in the memory and perform the following operations:
reporting the monitoring-related information of the first model to the network device on a first resource;
where the first resource includes any of the following:
   a resource configured by the network device for reporting the monitoring-related information of the first model;
   PUSCH resources already available to the UE;
   PUSCH resources requested by the UE through a Scheduling Request (SR).

In some embodiments, the processor 710 is used to read the computer program in the memory and perform the following operations:
when storing a measurement result of an L-th measurement, if a required storage space exceeds a remaining storage space of the UE, discarding, a stored earliest measurement result and storing the measurement result of the L-th measurement.

It is to be noted here that the above UE provided in the embodiment of the present disclosure can implement all the method steps implemented in the above UE-side method embodiment, and can achieve the same technical effect. The parts and beneficial effects of this embodiment that are the same as the method embodiment will not be described in detail here.

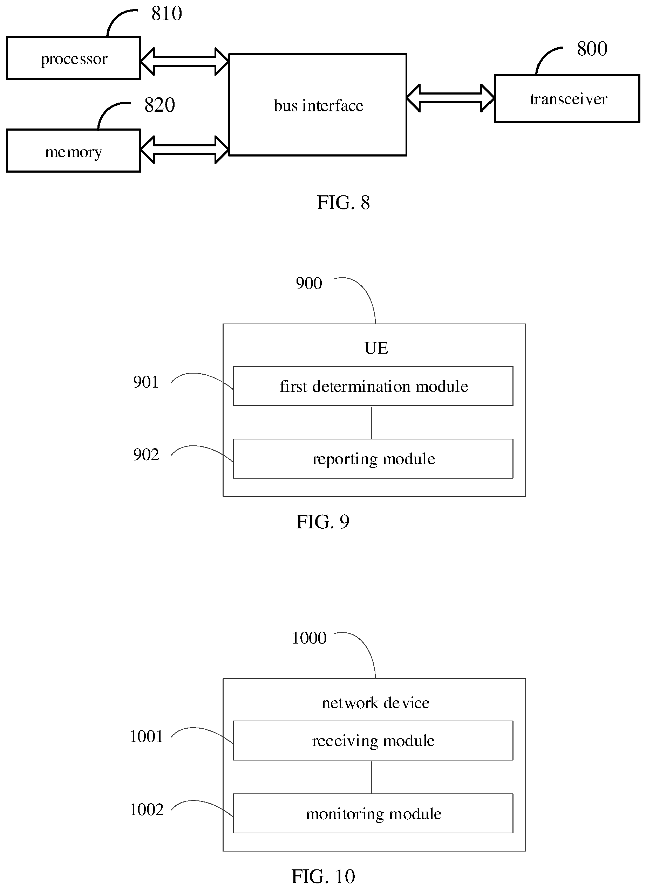

Referring to FIG. 8, FIG. 8 is a structural diagram of a network device according to an embodiment of the present disclosure. As shown in FIG. 8, the network device includes a memory 820, a transceiver 800 and a processor 810.

The memory 820 is used to store a computer program; the transceiver 800 is used to send and receive data under the control of the processor 810; the processor 810 is used to read the computer program in the memory 820 and perform the following operations:
receiving monitoring-related information of a first model reported by a UE;
performing performance monitoring of the first model based on the monitoring-related information.

In FIG. 8, a bus architecture may include any number of interconnected bus and bridge. Specifically, various circuits of one or more processors, which are represented by the processor 810, and one or more memories, which are represented by the memory 820, are linked together. The bus architecture may link various other circuits, such as a peripheral device, voltage regulator and a power management circuit together. These features are well known in this field; therefore, the present disclosure does not make further description on these features. The bus interface provides an interface. The transceiver 800 may be multiple elements, including a transmitter and a receiver and provide units, which communicate with other devices on the transmission medium. The transmission medium includes radio channels, wired channels, optical cables, etc. The processor 810 is responsible for managing the bus architecture and the normal processing. The memory 820 may be used to store data used by the processor 810 for performing operations.

In some embodiments, the processor 810 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the processor 810 is used to read the computer program in the memory and further perform the following operations:
transmitting first information to the UE, where the first information is used to indicate at least one of the following:
a monitoring-reporting period of the first model;
a monitoring start time of the first model;
a first preset condition that a prediction result of the first model needs to satisfy.

In some embodiments, the reporting condition is determined by predefined performance monitoring-related parameter, and the performance monitoring-related parameter includes at least one of the following:
a monitoring-reporting period of the first model;
a monitoring start time of the first model;
a first preset condition that a prediction result of the first model needs to satisfy.

In some embodiments, the processor 810 is used to read the computer program in the memory and perform the following operations:
transmitting reporting trigger information to the UE, where the reporting trigger information is used to instruct reporting of the monitoring-related information of the first model.

In some embodiments, the processor 810 is used to read the computer program in the memory and perform the following operations:
when the network device monitors that a system performance indicator meets a second preset condition, transmitting the reporting trigger information to the UE.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

In some embodiments, the processor 810 is used to read the computer program in the memory and perform the following operations:
calculating a monitoring indicator of the first model based on the monitoring-related information.

In some embodiments, when the first model is deployed on the network device, the monitoring-related information includes measurement results of N measurements performed by the UE on the reference signal, where N is an integer greater than 1.

The processor 810 is used to read the computer program in the memory and perform the following operations:
selecting N predictions corresponding to the N measurements from all predictions of the first model;
calculating the monitoring indicator of the first model according to prediction results of the N predictions and the measurement results of the N measurements;
   or,
selecting M measurements from the N measurements, where M is an integer greater than 1;
selecting M predictions corresponding to the M measurements from all predictions of the first model;
calculating the monitoring indicator of the first model according to the prediction results of the M predictions and the measurement results of the M measurements.

In some embodiments, the M measurements selected by the network device from the N measurements include at least one of the following:
a first measurement within the monitoring reporting period;
a first measurement starting from the monitoring start time;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

In some embodiments, when the first model is deployed on the UE, the monitoring-related information includes at least one of the following:
measurement results of N measurements performed by the UE on a reference signal, where N is an integer greater than 1;
prediction results of N predictions of the first model, where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

In some embodiments, the processor 810 is used to read the computer program in the memory and perform the following operations:
receiving, on a first resource, the monitoring-related information of the first model reported by the UE;
where the first resource includes any of the following:
   a resource configured by the network device for reporting the monitoring-related information of the first model;
   PUSCH resources already available to the UE;
   PUSCH resources requested by the UE through a Scheduling Request (SR).

In some embodiments, the processor 810 is used to read the computer program in the memory and perform the following operations:
performing a first process according to a monitoring indicator of the first model, where the first process includes any one of the following:
activating the first model;
deactivating the first model.

It is to be noted here that the above network device provided in the embodiment of the present disclosure can implement all the method steps implemented in the above network device side method embodiment, and can achieve the same technical effect. The parts and beneficial effects of this embodiment that are the same as the method embodiment will not be described in detail here.

Referring to FIG. 9, FIG. 9 is a structural diagram of a UE according to an embodiment of the present disclosure. As shown in FIG. 9, the UE 900 includes:
a first determination module 901 used to determine whether a reporting condition of monitoring-related information of a first model is satisfied;
a reporting module 902 used to, when the reporting condition is satisfied, report the monitoring-related information of the first model, to the network device.

In some embodiments, the UE 900 further includes:
a second determining module used to determine, according to first information transmitted by the network device, the reporting condition of the monitoring-related information of the first model; where the first information is used to indicate at least one of the following:
a monitoring-reporting period of the first model;
a monitoring start time of the first model;
a first preset condition that a prediction result of the first model needs to satisfy.

In some embodiments, the UE 900 further includes:
a third determination module used to determine the reporting condition of the monitoring-related information of the first model according to a predefined performance monitoring-related parameter; where the performance monitoring-related parameter includes at least one of the following:
a monitoring-reporting period of the first model;
a monitoring start time of the first model;
a first preset condition that a prediction result of the first model needs to satisfy.

In some embodiments, the reporting condition includes at least one of the following:
a reporting moment of the monitoring reporting period of the first model arrives;
the UE 900 receiving reporting trigger information from the network device, where the reporting trigger information is used to indicate reporting of the monitoring-related information of the first model;
the UE 900 detecting that a prediction result of the first model satisfies the first preset condition.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE 900;
an average of absolute values of differences between layer 1 reference signal received power values of optimal K beams predicted by the first model and layer 1 reference signal received power values of optimal K beams measured by the UE 900, is greater than or equal to a third threshold.

In some embodiments, the monitoring-related information reported by the UE 900 includes at least one of the following:
measurement results of N measurements performed by the UE 900 on the reference signal, where N is an integer greater than 1;
prediction results of N predictions of the first model; where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

In some embodiments, the N measurements are all measurements of the UE; or, the N measurements are selected by the UE from all measurements; or, the N measurements are corresponding to N predictions selected by the UE from all predictions of the first model.

In some embodiments, the UE 900 uses a bit map to indicate measurement orders of the N measurements in all measurements through, or indicate measurement identifier information of the N measurements.

In some embodiments, the N measurements selected by the UE from all measurements include at least one of the following:
a first measurement within the monitoring reporting period of the first model;
a first measurement starting from the monitoring start time of the first model;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

In some embodiments, the N predictions selected by the UE from all predictions of the first model include at least one of the following:
a first prediction within the monitoring and reporting period;
a first prediction starting from the monitoring start time;
a prediction whose prediction result differs from that of a previous prediction;
a prediction where a difference between its prediction result maximum value and a prediction result maximum value of a previous prediction is greater than a ninth threshold;
a prediction where a difference between its prediction result minimum value and a prediction result minimum value of a previous prediction is greater than a tenth threshold;
a prediction where a difference between its prediction result average value and a prediction result average value of a previous prediction is greater than an eleventh threshold;
a prediction where a difference between its prediction result standard deviation and a prediction result standard deviation of a previous prediction is greater than a twelfth threshold;
a prediction where a difference between its prediction result variance and a prediction result variance of a previous prediction is greater than a thirteenth threshold.

In some embodiments, the reporting module 902 is specifically used to:
report the monitoring-related information of the first model to the network device on a first resource;
where the first resource includes any of the following:
   a resource configured by the network device for reporting the monitoring-related information of the first model;
   PUSCH resources already available to the UE 900;
   PUSCH resources requested by the UE 900 through a Scheduling Request (SR).

In some embodiments, the UE 900 further includes:
a processing module used to, when storing a measurement result of an L-th measurement, if a required storage space exceeds a remaining storage space of the UE, discard, a stored earliest measurement result and store the measurement result of the L-th measurement.

It is to be noted here that the above UE provided in the embodiment of the present disclosure can implement all the method steps implemented in the above UE-side method embodiment, and can achieve the same technical effect. The parts and beneficial effects of this embodiment that are the same as the method embodiment will not be described in detail here.

Referring to FIG. 10, FIG. 10 is a structural diagram of a network device according to an embodiment of the present disclosure. As shown in FIG. 10, the network device 1000 includes:
a receiving module 1001 used to receive monitoring-related information of a first model reported by a UE;
a monitoring module 1002 used to perform performance monitoring of the first model based on the monitoring-related information.

In some embodiments, the network device 1000 further includes:
a first transmission module used to transmit first information to the UE, where the first information is used to indicate at least one of the following:
a monitoring-reporting period of the first model;
a monitoring start time of the first model;
a first preset condition that a prediction result of the first model needs to satisfy.

In some embodiments, the reporting condition is determined by predefined performance monitoring-related parameter, and the performance monitoring-related parameter includes at least one of the following:
a monitoring-reporting period of the first model;
a monitoring start time of the first model;
a first preset condition that a prediction result of the first model needs to satisfy.

In some embodiments, the network device 1000 further includes:
a second transmission module used to transmit reporting trigger information to the UE, where the reporting trigger information is used to instruct reporting of the monitoring-related information of the first model.

In some embodiments, the network device 1000 further includes:
a third transmission module used to, when the network device monitors that a system performance indicator meets a second preset condition, transmit the reporting trigger information to the UE.

In some embodiments, the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

In some embodiments, the monitoring module 1002 includes:
a calculation unit used to calculate a monitoring indicator of the first model based on the monitoring-related information.

In some embodiments, when the first model is deployed on the network device 1000, the monitoring-related information includes measurement results of N measurements performed by the UE on the reference signal, where N is an integer greater than 1.

The calculation unit includes:
a first filtering subunit used to select N predictions corresponding to the N measurements from all predictions of the first model;
a first calculation subunit used to calculate the monitoring indicator of the first model according to prediction results of the N predictions and the measurement results of the N measurements;
   or,
the calculation unit includes:
   a second filtering subunit used to select M measurements from the N measurements, where M is an integer greater than 1;
   a third screening subunit used to select M predictions corresponding to the M measurements from all predictions of the first model;
   a second calculation subunit used to calculate the monitoring indicator of the first model according to the prediction results of the M predictions and the measurement results of the M measurements.

In some embodiments, the M measurements selected by the network device from the N measurements include at least one of the following:
a first measurement within the monitoring reporting period;
a first measurement starting from the monitoring start time;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

In some embodiments, when the first model is deployed on the UE, the monitoring-related information includes at least one of the following:
measurement results of N measurements performed by the UE on a reference signal, where N is an integer greater than 1;
prediction results of N predictions of the first model, where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

In some embodiments, the receiving module 1001 is specifically used to:
receive, on a first resource, the monitoring-related information of the first model reported by the UE;
where the first resource includes any of the following:
   a resource configured by the network device 1000 for reporting the monitoring-related information of the first model;
   PUSCH resources already available to the UE;
   PUSCH resources requested by the UE through a Scheduling Request (SR).

In some embodiments, the network device 1000 further includes:
a processing module used to perform a first process according to a monitoring indicator of the first model, where the first process includes any one of the following:
activating the first model;
deactivating the first model.

It is to be noted here that the above network device provided in the embodiment of the present disclosure can implement all the method steps implemented in the above network device side method embodiment, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, various functional units in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium, which stores a computer program. The computer program is used to cause a processor to execute the above performance monitoring method on the UE side, or cause the processor to execute the above performance monitoring method on the network device side.

The processor-readable storage medium can be a non-transitory readable storage medium.

The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

A person skilled in the art should understand that the embodiments of the present application may be provided as methods, systems, or computer program products. Therefore, the present application may adopt the form of complete hardware embodiments, complete software embodiments, or embodiments combining software and hardware aspects. Moreover, the present application may adopt the form of a computer program product implemented on one or more computer available storage media (including but not limited to a disk storage, an optical storage, etc.) containing computer available program code.

The present application is described with reference to flowcharts and/or block diagrams of methods, devices (systems), and computer program products according to the embodiments of the present application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determining module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general-purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. A performance monitoring method, comprising:
determining, by a user equipment (UE), whether a reporting condition of monitoring-related information of a first model is satisfied;
reporting, by the UE, the monitoring-related information of the first model, to a network device, when the reporting condition is satisfied.

2. The method according to claim 1, further comprising:
determining, by the UE, according to first information transmitted by the network device, the reporting condition of the monitoring-related information of the first model; wherein the first information is used to indicate at least one of the following:
a monitoring-reporting period of the first model;
a monitoring start time of the first model;
a first preset condition that a prediction result of the first model needs to satisfy.

3. The method according to claim 1, further comprising:
determining, by the UE, the reporting condition of the monitoring-related information of the first model according to a predefined performance monitoring-related parameter; wherein the performance monitoring-related parameter includes at least one of the following:
a monitoring-reporting period of the first model;
a monitoring start time of the first model;
a first preset condition that a prediction result of the first model needs to satisfy.

4. The method according to any one of claims 1 to 3, wherein the reporting condition includes at least one of the following:
a reporting moment of the monitoring reporting period of the first model arrives;
the UE receiving reporting trigger information from the network device, wherein the reporting trigger information is used to indicate reporting of the monitoring-related information of the first model;
the UE detecting that a prediction result of the first model satisfies the first preset condition.

5. The method according to claim 2 or 3, wherein the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

6. The method according to any one of claims 1 to 3, wherein the monitoring-related information reported by the UE includes at least one of the following:
measurement results of N measurements performed by the UE on the reference signal, where N is an integer greater than 1;
prediction results of N predictions of the first model; where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

7. The method according to claim 6, wherein the N measurements are all measurements of the UE; or, the N measurements are selected by the UE from all measurements; or, the N measurements are corresponding to N predictions selected by the UE from all predictions of the first model.

8. The method according to claim 7, wherein the UE uses a bit map to indicate measurement orders of the N measurements in all measurements through, or indicate measurement identifier information of the N measurements.

9. The method according to claim 7, wherein the N measurements selected by the UE from all measurements include at least one of the following:
a first measurement within the monitoring reporting period of the first model;
a first measurement starting from the monitoring start time of the first model;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

10. The method according to claim 7, wherein the N predictions selected by the UE from all predictions of the first model include at least one of the following:
a first prediction within the monitoring and reporting period;
a first prediction starting from the monitoring start time;
a prediction whose prediction result differs from that of a previous prediction;
a prediction where a difference between its prediction result maximum value and a prediction result maximum value of a previous prediction is greater than a ninth threshold;
a prediction where a difference between its prediction result minimum value and a prediction result minimum value of a previous prediction is greater than a tenth threshold;
a prediction where a difference between its prediction result average value and a prediction result average value of a previous prediction is greater than an eleventh threshold;
a prediction where a difference between its prediction result standard deviation and a prediction result standard deviation of a previous prediction is greater than a twelfth threshold;
a prediction where a difference between its prediction result variance and a prediction result variance of a previous prediction is greater than a thirteenth threshold.

11. The method according to any one of claims 1 to 3, wherein the reporting, by the UE, the monitoring-related information of the first model, to the network device, includes:
reporting, by the UE, the monitoring-related information of the first model to the network device on a first resource;
wherein the first resource includes any of the following:
a resource configured by the network device for reporting the monitoring-related information of the first model;
PUSCH resources already available to the UE;
PUSCH resources requested by the UE through a Scheduling Request (SR).

12. The method according to any one of claims 1 to 3, wherein the method further includes:
when storing a measurement result of an L-th measurement, if a required storage space exceeds a remaining storage space of the UE, discarding, by the UE, a stored earliest measurement result and storing the measurement result of the L-th measurement.

13. A performance monitoring method, comprising:
receiving, by a network device, monitoring-related information of a first model reported by a user equipment (UE);
performing, by the network device, performance monitoring of the first model based on the monitoring-related information.

14. The method according to claim 13, further comprising:
transmitting, by the network device, first information to the UE, wherein the first information is used to indicate at least one of the following:
a monitoring-reporting period of the first model;
a monitoring start time of the first model;
a first preset condition that a prediction result of the first model needs to satisfy.

15. The method according to claim 13 or 14, further comprising:
transmitting, by the network device, reporting trigger information to the UE, wherein the reporting trigger information is used to instruct reporting of the monitoring-related information of the first model.

16. The method according to claim 15, wherein the transmitting, by the network device, reporting trigger information to the UE, includes:
when the network device monitors that a system performance indicator meets a second preset condition, transmitting the reporting trigger information to the UE.

17. The method according to claim 14, wherein the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

18. The method according to claim 13 or 14, wherein the performing, by the network device, performance monitoring of the first model based on the monitoring-related information, includes:
calculating, by the network device, a monitoring indicator of the first model based on the monitoring-related information.

19. The method according to claim 18, wherein when the first model is deployed on the network device, the monitoring-related information includes measurement results of N measurements performed by the UE on the reference signal, wherein N is an integer greater than 1;
the calculating, by the network device, a monitoring indicator of the first model based on the monitoring-related information, includes:
selecting, by the network device, N predictions corresponding to the N measurements from all predictions of the first model;
calculating, by the network device, the monitoring indicator of the first model according to prediction results of the N predictions and the measurement results of the N measurements;
or,
the calculating, by the network device, a monitoring indicator of the first model based on the monitoring-related information, includes:
selecting, by the network device, M measurements from the N measurements, where M is an integer greater than 1;
selecting, by the network device, M predictions corresponding to the M measurements from all predictions of the first model;
calculating, by the network device, the monitoring indicator of the first model according to the prediction results of the M predictions and the measurement results of the M measurements.

20. The method according to claim 19, wherein the M measurements selected by the network device from the N measurements include at least one of the following:
a first measurement within the monitoring reporting period;
a first measurement starting from the monitoring start time;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

21. The method according to claim 13 or 14, wherein when the first model is deployed on the UE, the monitoring-related information includes at least one of the following:
measurement results of N measurements performed by the UE on a reference signal, where N is an integer greater than 1;
prediction results of N predictions of the first model, where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

22. The method according to claim 13 or 14, wherein the receiving, by a network device, monitoring-related information of a first model reported by a user equipment (UE), includes:
receiving, by a network device, on a first resource, the monitoring-related information of the first model reported by the UE;
wherein the first resource includes any of the following:
a resource configured by the network device for reporting the monitoring-related information of the first model;
PUSCH resources already available to the UE;
PUSCH resources requested by the UE through a Scheduling Request (SR).

23. The method according to claim 18, wherein the method further includes:
performing, by the network device, a first process according to a monitoring indicator of the first model, wherein the first process includes any one of the following:
activating the first model;
deactivating the first model.

24. A user equipment (UE), comprising: a memory, a transceiver and a processor;
wherein the memory is used to store a computer program; the transceiver is used to send and receive data under the control of the processor; the processor is used to read the computer program in the memory and perform the following operations:
determining whether a reporting condition of monitoring-related information of a first model is satisfied;
reporting the monitoring-related information of the first model, to a network device, when the reporting condition is satisfied.

25. The UE according to claim 24, wherein the processor is used to read the computer program in the memory and perform the following operations:
determining, according to first information transmitted by the network device, the reporting condition of the monitoring-related information of the first model; wherein the first information is used to indicate at least one of the following:
a monitoring-reporting period of the first model;
a monitoring start time of the first model;
a first preset condition that a prediction result of the first model needs to satisfy.

26. The UE according to claim 24, wherein the processor is used to read the computer program in the memory and perform the following operations:
determining the reporting condition of the monitoring-related information of the first model according to a predefined performance monitoring-related parameter; wherein the performance monitoring-related parameter includes at least one of the following:
a monitoring-reporting period of the first model;
a monitoring start time of the first model;
a first preset condition that a prediction result of the first model needs to satisfy.

27. The UE according to any one of claims 24 to 26, wherein the reporting condition includes at least one of the following:
a reporting moment of the monitoring reporting period of the first model arrives;
the UE receiving reporting trigger information from the network device, wherein the reporting trigger information is used to indicate reporting of the monitoring-related information of the first model;
the UE detecting that a prediction result of the first model satisfies the first preset condition.

28. The UE according to claim 25 or 26, wherein the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

29. The UE according to any one of claims 24 to 26, wherein
the monitoring-related information reported by the UE includes at least one of the following:
measurement results of N measurements performed by the UE on the reference signal, where N is an integer greater than 1;
prediction results of N predictions of the first model; where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

30. The UE according to claim 29, wherein the N measurements are all measurements of the UE; or, the N measurements are selected by the UE from all measurements; or, the N measurements are corresponding to N predictions selected by the UE from all predictions of the first model.

31. The UE according to claim 30, wherein the processor is used to read the computer program in the memory and perform the following operations:
using a bit map to indicate measurement orders of the N measurements in all measurements through, or indicate measurement identifier information of the N measurements.

32. The UE according to claim 30, wherein the N measurements selected by the UE from all measurements include at least one of the following:
a first measurement within the monitoring reporting period of the first model;
a first measurement starting from the monitoring start time of the first model;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

33. The UE according to claim 30, wherein the N predictions selected by the UE from all predictions of the first model include at least one of the following:
a first prediction within the monitoring and reporting period;
a first prediction starting from the monitoring start time;
a prediction whose prediction result differs from that of a previous prediction;
a prediction where a difference between its prediction result maximum value and a prediction result maximum value of a previous prediction is greater than a ninth threshold;
a prediction where a difference between its prediction result minimum value and a prediction result minimum value of a previous prediction is greater than a tenth threshold;
a prediction where a difference between its prediction result average value and a prediction result average value of a previous prediction is greater than an eleventh threshold;
a prediction where a difference between its prediction result standard deviation and a prediction result standard deviation of a previous prediction is greater than a twelfth threshold;
a prediction where a difference between its prediction result variance and a prediction result variance of a previous prediction is greater than a thirteenth threshold.

34. The UE according to any one of claims 24 to 26, wherein the processor is used to read the computer program in the memory and perform the following operations:
reporting the monitoring-related information of the first model to the network device on a first resource;
wherein the first resource includes any of the following:
a resource configured by the network device for reporting the monitoring-related information of the first model;
PUSCH resources already available to the UE;
PUSCH resources requested by the UE through a Scheduling Request (SR).

35. The UE according to any one of claims 24 to 26, wherein the processor is used to read the computer program in the memory and perform the following operations:
when storing a measurement result of an L-th measurement, if a required storage space exceeds a remaining storage space of the UE, discarding a stored earliest measurement result and storing the measurement result of the L-th measurement.

36. A network device, comprising: a memory, a transceiver and a processor;
wherein the memory is used to store a computer program; the transceiver is used to send and receive data under the control of the processor; the processor is used to read the computer program in the memory and perform the following operations:
receiving monitoring-related information of a first model reported by a user equipment (UE);
performing performance monitoring of the first model based on the monitoring-related information.

37. The network device according to claim 36, wherein the processor is used to read the computer program in the memory and perform the following operations:
transmitting first information to the UE, wherein the first information is used to indicate at least one of the following:
a monitoring-reporting period of the first model;
a monitoring start time of the first model;
a first preset condition that a prediction result of the first model needs to satisfy.

38. The network device according to claim 36 or 37, wherein the processor is used to read the computer program in the memory and perform the following operations:
transmitting reporting trigger information to the UE, wherein the reporting trigger information is used to instruct reporting of the monitoring-related information of the first model.

39. The network device according to claim 38, wherein the processor is used to read the computer program in the memory and perform the following operations:
when the network device monitors that a system performance indicator meets a second preset condition, transmitting the reporting trigger information to the UE.

40. The network device according to claim 37, wherein the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

41. The network device according to claim 36 or 37, wherein the processor is used to read the computer program in the memory and perform the following operations:
calculating a monitoring indicator of the first model based on the monitoring-related information.

42. The network device according to claim 41, wherein when the first model is deployed on the network device, the monitoring-related information includes measurement results of N measurements performed by the UE on the reference signal, wherein N is an integer greater than 1;
wherein the processor is used to read the computer program in the memory and perform the following operations:
selecting, by the network device, N predictions corresponding to the N measurements from all predictions of the first model;
calculating, by the network device, the monitoring indicator of the first model according to prediction results of the N predictions and the measurement results of the N measurements;
or,
selecting, by the network device, M measurements from the N measurements, where M is an integer greater than 1;
selecting, by the network device, M predictions corresponding to the M measurements from all predictions of the first model;
calculating, by the network device, the monitoring indicator of the first model according to the prediction results of the M predictions and the measurement results of the M measurements.

43. The network device according to claim 42, wherein the M measurements selected by the network device from the N measurements include at least one of the following:
a first measurement within the monitoring reporting period;
a first measurement starting from the monitoring start time;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

44. The network device according to claim 36 or 37, wherein when the first model is deployed on the UE, the monitoring-related information includes at least one of the following:
measurement results of N measurements performed by the UE on a reference signal, where N is an integer greater than 1;
prediction results of N predictions of the first model, where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

45. The network device according to claim 36 or 37, wherein the processor is used to read the computer program in the memory and perform the following operations:
receiving, on a first resource, the monitoring-related information of the first model reported by the UE;
wherein the first resource includes any of the following:
a resource configured by the network device for reporting the monitoring-related information of the first model;
PUSCH resources already available to the UE;
PUSCH resources requested by the UE through a Scheduling Request (SR).

46. The network device according to claim 41, wherein the processor is used to read the computer program in the memory and perform the following operations:
performing a first process according to a monitoring indicator of the first model, wherein the first process includes any one of the following:
activating the first model;
deactivating the first model.

47. A user equipment (UE), comprising:
a first determination module used to determine whether a reporting condition of monitoring-related information of a first model is satisfied;
a reporting module used to report the monitoring-related information of the first model, to a network device, when the reporting condition is satisfied.

48. The UE according to claim 47, further comprising:
a second determining module used to determine, according to first information transmitted by the network device, the reporting condition of the monitoring-related information of the first model; wherein the first information is used to indicate at least one of the following:
a monitoring-reporting period of the first model;
a monitoring start time of the first model;
a first preset condition that a prediction result of the first model needs to satisfy.

49. The UE according to claim 47, further comprising:
a third determination module used to determine the reporting condition of the monitoring-related information of the first model according to a predefined performance monitoring-related parameter; wherein the performance monitoring-related parameter includes at least one of the following:
a monitoring-reporting period of the first model;
a monitoring start time of the first model;
a first preset condition that a prediction result of the first model needs to satisfy.

50. The UE according to any one of claims 47 to 49, wherein the reporting condition includes at least one of the following:
a reporting moment of the monitoring reporting period of the first model arrives;
the UE receiving reporting trigger information from the network device, wherein the reporting trigger information is used to indicate reporting of the monitoring-related information of the first model;
the UE detecting that a prediction result of the first model satisfies the first preset condition.

51. The UE according to claim 48 or 49, wherein the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

52. The UE according to any one of claims 47 to 49, wherein the monitoring-related information reported by the UE includes at least one of the following:
measurement results of N measurements performed by the UE on the reference signal, where N is an integer greater than 1;
prediction results of N predictions of the first model; where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

53. The UE according to claim 52, wherein the N measurements are all measurements of the UE; or, the N measurements are selected by the UE from all measurements; or, the N measurements are corresponding to N predictions selected by the UE from all predictions of the first model.

54. The UE according to claim 53, wherein the UE uses a bit map to indicate measurement orders of the N measurements in all measurements through, or indicate measurement identifier information of the N measurements.

55. The UE according to claim 53, wherein the N measurements selected by the UE from all measurements include at least one of the following:
a first measurement within the monitoring reporting period of the first model;
a first measurement starting from the monitoring start time of the first model;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

56. The UE according to claim 53, wherein the N predictions selected by the UE from all predictions of the first model include at least one of the following:
a first prediction within the monitoring and reporting period;
a first prediction starting from the monitoring start time;
a prediction whose prediction result differs from that of a previous prediction;
a prediction where a difference between its prediction result maximum value and a prediction result maximum value of a previous prediction is greater than a ninth threshold;
a prediction where a difference between its prediction result minimum value and a prediction result minimum value of a previous prediction is greater than a tenth threshold;
a prediction where a difference between its prediction result average value and a prediction result average value of a previous prediction is greater than an eleventh threshold;
a prediction where a difference between its prediction result standard deviation and a prediction result standard deviation of a previous prediction is greater than a twelfth threshold;
a prediction where a difference between its prediction result variance and a prediction result variance of a previous prediction is greater than a thirteenth threshold.

57. The UE according to any one of claims 47 to 49, wherein the reporting module is specifically used to:
report the monitoring-related information of the first model to the network device on a first resource;
wherein the first resource includes any of the following:
a resource configured by the network device for reporting the monitoring-related information of the first model;
PUSCH resources already available to the UE;
PUSCH resources requested by the UE through a Scheduling Request (SR).

58. The UE according to any one of claims 47 to 49, wherein the UE further includes:
a processing module used to, when storing a measurement result of an L-th measurement, if a required storage space exceeds a remaining storage space of the UE, discard a stored earliest measurement result and store the measurement result of the L-th measurement.

59. A network device, comprising:
a receiving module used to receive monitoring-related information of a first model reported by a user equipment (UE);
a monitoring module used to perform performance monitoring of the first model based on the monitoring-related information.

60. The network device according to claim 59, further comprising:
a first transmission module used to transmit first information to the UE, wherein the first information is used to indicate at least one of the following:
a monitoring-reporting period of the first model;
a monitoring start time of the first model;
a first preset condition that a prediction result of the first model needs to satisfy.

61. The network device according to claim 59 or 60, further comprising:
a second transmission module used to transmit reporting trigger information to the UE, wherein the reporting trigger information is used to instruct reporting of the monitoring-related information of the first model.

62. The network device according to claim 61, further comprising:
a third transmission module used to, when the network device monitors that a system performance indicator meets a second preset condition, transmit the reporting trigger information to the UE.

63. The network device according to claim 60, wherein the first preset condition includes at least one of the following:
the number of times that optimal K beams predicted by the first model do not include an actual optimal beam, is greater than or equal to a first threshold; where K is an integer greater than or equal to 1, and the actual optimal beam is determined based on a measurement result of the UE;
the number of times that an optimal beam predicted by the first model does not belong to actual optimal K beams, is greater than or equal to a second threshold; where the actual optimal K beams are determined based on a measurement result of the UE;
an average of absolute values of differences between layer 1 reference signal received power values of optimal K beams predicted by the first model and layer 1 reference signal received power values of optimal K beams measured by the UE, is greater than or equal to a third threshold.

64. The network device according to claim 59 or 60, wherein the monitoring module includes:
a calculation unit used to calculate a monitoring indicator of the first model based on the monitoring-related information.

65. The network device according to claim 64, wherein when the first model is deployed on the network device, the monitoring-related information includes measurement results of N measurements performed by the UE on the reference signal, wherein N is an integer greater than 1;
wherein the calculation unit includes:
a first filtering subunit used to select N predictions corresponding to the N measurements from all predictions of the first model;
a first calculation subunit used to calculate the monitoring indicator of the first model according to prediction results of the N predictions and the measurement results of the N measurements;
or,
wherein the calculation unit includes:
a second filtering subunit used to select M measurements from the N measurements, where M is an integer greater than 1;
a third screening subunit used to select M predictions corresponding to the M measurements from all predictions of the first model;
a second calculation subunit used to calculate the monitoring indicator of the first model according to the prediction results of the M predictions and the measurement results of the M measurements.

66. The network device according to claim 65, wherein the M measurements selected by the network device from the N measurements include at least one of the following:
a first measurement within the monitoring reporting period;
a first measurement starting from the monitoring start time;
a measurement whose result differs from that of a previous measurement;
a measurement where a difference between its measurement result maximum value and a measurement result maximum value of a previous measurement is greater than a fourth threshold;
a measurement where a difference between its measurement result minimum value and a measurement result minimum value of the previous measurement is greater than a fifth threshold;
a measurement where a difference between its measurement result average value and a measurement result average value of a previous measurement is greater than a sixth threshold;
a measurement where a difference between its measurement result standard deviation and a measurement result standard deviation of a previous measurement is greater than a seventh threshold;
a measurement where a difference between its measurement result variance and a measurement result variance of a previous measurement is greater than an eighth threshold.

67. The network device according to claim 59 or 60, wherein when the first model is deployed on the UE, the monitoring-related information includes at least one of the following:
measurement results of N measurements performed by the UE on a reference signal, where N is an integer greater than 1;
prediction results of N predictions of the first model, where the N predictions are predictions corresponding to the N measurements;
a difference between the measurement results of the N measurements and the prediction results of the N predictions;
the number of times that optimal K beams predicted by the first model do not include an actual optimal beam;
the number of times that an optimal beam predicted by the first model does not belong to actual optimal K beams;
differences, or absolute values of the differences, or an average value of absolute values of differences between layer 1 reference signal received power values of optimal K beams predicted by the first model and layer 1 reference signal received power values of actual optimal K beams;
differences, or absolute values of the differences, or an average value of absolute values of differences between layer 1 reference signal received power values of optimal beams predicted by the first model and layer 1 reference signal received power values of actual optimal beams;
identifier information of the first model.

68. The network device according to claim 59 or 60, wherein the receiving module is specifically used to:
receive, on a first resource, the monitoring-related information of the first model reported by the UE;
wherein the first resource includes any of the following:
a resource configured by the network device for reporting the monitoring-related information of the first model;
PUSCH resources already available to the UE;
PUSCH resources requested by the UE through a Scheduling Request (SR).

69. The network device according to claim 64, further comprising:
a processing module used to perform a first process according to a monitoring indicator of the first model, wherein the first process includes any one of the following:
activating the first model;
deactivating the first model.

70. A processor-readable storage medium, comprising: a computer program stored thereon; wherein the computer program is used to cause a processor to execute steps of the method according to any one of claims 1 to 12, or the computer program is used to cause the processor to execute steps of the method according to any one of claims 13 to 23.
